# EUROPEAN PATENT APPLICATION

(11) **EP 4 761 354 A1**
(43) Date of publication of application: **17.06.2026**
(21) Application number: 24853697.1
(22) Date of filing: 09.08.2024
(51) Int. Cl.: H04W 36/00

(54) **SWITCHING METHOD AND APPARATUS, AND STORAGE MEDIUM**

(30) Priority: 11.08.2023 CN 202311014905
(71) Applicant: Datang Mobile Communications Equipment Co., Ltd., Beijing 100085 (CN)
(72) Inventor: LU, Yang, Beijing 100085 (CN)
(74) Representative: Studio Torta S.p.A.
(86) International application number: PCT/CN2024/111051
(87) International publication number: WO 2025/036288

(57) **Abstract**

A handover method, performed by a source donor-centralized unit (CU) of a source logical distributed unit (DU) of a mobile integrated access and backhaul (IAB) node, the method including: obtaining associated information of a target logical DU cell of the mobile IAB node; and handing over a user equipment (UE) served by the mobile IAB node from a source logical DU cell of the mobile IAB node to the target logical DU cell of the mobile IAB node based on the associated information.

## Description

### CROSS-REFERENCE TO RELATED APPLICATIONS

The application claims the priority of Chinese patent application No. 202311014905.X, filed on August 11, 2023, titled "Handover method and Apparatus, and Storage Medium", the entire content of which is incorporated herein by reference.

### TECHNICAL FIELD

The present disclosure relates to a field of communication technologies, in particular to a handover method and apparatus, and a storage medium.

### BACKGROUND

Related art has started to discuss a mobile integrated access and backhaul (IAB) node, to enhance a support for mobility scenarios. For example, the mobile IAB node is installed on a vehicle traveling at a high/low speed, to provide a service for a user on the vehicle. Therefore, it is determined that a support of changing a donor-centralized unit (CU) of an IAB-distributed unit (DU), i.e., IAB-DU migration, is required.

After the IAB-DU migration, a source logical DU needs to release the F1 connection with a source donor-CU, and thus a terminal/user equipment (UE) served by the source logical DU needs to be handed over to another cell. According to the related art, the source donor-CU may determine a target cell to which the UE is handed over according to measurement report results of neighboring cells of the UE. When a source logical DU cell and a target logical DU cell have a same downlink frequency point, the source logical DU cell and the target logical DU cell cannot be activated at the same time. Therefore, the UE served by the source logical DU cannot measure signal quality of the target logical DU cell, and thereby the source donor-CU cannot determine the target cell to which the UE is handed over.

### SUMMARY

Embodiments of the present disclosure provide a handover method and apparatus, and a storage medium, to address the technical problem in the related art that the source donor-CU cannot determine the target cell to which the UE is handed over.

According to a first aspect, embodiments of the present disclosure provide a handover method. The method is performed by a source donor- centralized unit (CU) of a source logical distributed unit (DU) of a mobile integrated access and backhaul (IAB) node, and includes:
obtaining associated information of a target logical DU cell of the mobile IAB node; and
handing over a user equipment (UE) served by the mobile IAB node from a source logical DU cell of the mobile IAB node to the target logical DU cell of the mobile IAB node based on the associated information.

In some embodiments, handing over the UE served by the mobile IAB node from the source logical DU cell of the mobile IAB node to the target logical DU cell of the mobile IAB node based on the associated information, includes:
configuring the UE to perform a measurement on the target logical DU cell; and
determining to hand over the UE to the target logical DU cell of the mobile IAB node based on a measurement result.

In some embodiments, handing over the UE served by the mobile IAB node from the source logical DU cell of the mobile IAB node to the target logical DU cell of the mobile IAB node based on the associated information, includes:
determining to hand over the UE to the target logical DU cell based on a correspondence relationship or a co-location relationship between the target logical DU cell and the source logical DU cell.

In some embodiments, the target logical DU cell and the source logical DU cell have a same downlink frequency point, or the target logical DU cell and the source logical DU cell have different downlink frequency points.

In some embodiments, obtaining the associated information of the target logical DU cell of the mobile IAB node includes:
obtaining the associated information sent by a source logical DU of the mobile IAB node via an F1 application protocol (F1AP) message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

In some embodiments, the method further includes:
receiving a handover command for the UE from a target donor-CU of a target logical DU of the mobile IAB node; and
sending the handover command to the UE.

According to a second aspect, embodiments of the present disclosure provide a handover method. The method is performed by a mobile IAB node, and includes:
sending associated information of a target logical DU cell of the mobile IAB node, in which the associated information is used for handing over a UE served by the mobile IAB node from a source logical DU cell of the mobile IAB node to the target logical DU cell of the mobile IAB node.

In some embodiments, the method further includes:
determining a beam for the UE to perform a random access channel (RACH)-less handover in the target logical DU cell;
configuring synchronization signal blocks (SSBs) corresponding to the beam and configured grant (CG) physical uplink shared channel (PUSCH) resources for the SSBs, in which the PUSCH resources are used for the UE to send an initial uplink message for the RACH-less handover to the target logical DU cell; and
sending first configuration information to a target donor-CU of a target logical DU of the mobile IAB node via an F1AP message, in which the first configuration information indicates the SSBs corresponding to the beam and the CG PUSCH resources for the SSBs.

In some embodiments, the method further includes:
determining a beam for the UE to perform an RACH-less handover in the target logical DU cell; and
dynamically scheduling a CG PUSCH resource for the UE via a physical downlink control channel (PDCCH) associated with an SSB corresponding to the beam, in which the PUSCH resource is used for the UE to send an initial uplink message to the target logical DU cell.

In some embodiments, determining the beam for the UE to perform the RACH-less handover in the target logical DU cell includes:
determining the beam for the UE to perform the RACH-less handover in the target logical DU cell based on a measurement result of the UE for the target logical DU cell included in handover preparation information.

In some embodiments, determining the beam for the UE to perform the RACH-less handover in the target logical DU cell includes:
determining a beam used by the UE in the source logical DU cell; and
determining the beam for the UE to perform the RACH-less handover in the target logical DU cell based on the beam used by the UE in the source logical DU cell.

In some embodiments, sending the associated information of the target logical DU cell of the mobile IAB node, includes:
sending the associated information of the target logical DU cell of the mobile IAB node to a source donor-CU of a source logical DU of the mobile IAB node via the F1AP message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

According to a third aspect, embodiments of the present disclosure provide a handover method. The method is applied to a UE, and includes:
determining a PUSCH resource for an SSB corresponding to a beam used for performing an RACH-less handover in a target cell; and
sending an initial uplink message to the target cell using the PUSCH resource.

In some embodiments, determining the PUSCH resource for the SSB corresponding to the beam used for performing the RACH-less handover in the target cell, includes:
receiving a handover command containing first configuration information from a network device, in which the first configuration information indicates SSBs corresponding to the beam used for performing the RACH-less handover in the target cell and CG PUSCH resources for the SSBs; and
selecting the SSB corresponding to the beam used for performing the RACH-less handover in the target cell and determining the PUSCH resource for the SSB based on the first configuration information.

In some embodiments, determining the PUSCH resource for the SSB corresponding to the beam used for performing the RACH-less handover in the target cell includes:
receiving a handover command not containing first configuration information from a network device, in which the first configuration information indicates SSBs corresponding to the beam used for performing the RACH-less handover in the target cell and CG PUSCH resources for the SSBs; and
determining that an SSB corresponding to a PDCCH used by the target cell for scheduling for the UE is the SSB corresponding to the beam used for performing the RACH-less handover in the target cell, detecting the PDCCH used by the target cell for scheduling for the UE, and determining a PUSCH resource scheduled by the PDCCH.

In some embodiments, the handover command further includes second configuration information, and the second configuration information indicates an SSB reception power threshold for the UE to select the SSB; and
selecting the SSB corresponding to the beam used for performing the RACH-less handover in the target cell, includes:
selecting an SSB with reception power being greater than the SSB reception power threshold among the SSBs indicated in the first configuration information as the SSB corresponding to the beam used for performing the RACH-less handover in the target cell; or
selecting an SSB corresponding to the PDCCH with reception power being greater than the SSB reception power threshold as the SSB corresponding to the beam used for performing the RACH-less handover in the target cell.

In some embodiments, the method further includes:
initiating a random access procedure to access the target cell, in a case that reception power of the SSBs indicated in the first configuration information is less than the SSB reception power threshold, or the reception power of the SSB corresponding to the PDCCH is less than the SSB reception power threshold.

According to a fourth aspect, embodiments of the present disclosure provide a source donor-CU of a source logical DU of a mobile IAB node. The source donor-CU includes: a memory, a transceiver and a processor.

The memory is configured to store a computer program, the transceiver is configured to send and receive data under the control of the processor, and the processor is configured to read the computer program from the memory and perform operations of:
obtaining associated information of a target logical DU cell of the mobile IAB node; and
handing over a UE served by the mobile IAB node from a source logical DU cell of the mobile IAB node to the target logical DU cell of the mobile IAB node based on the associated information.

In some embodiments, handing over the UE served by the mobile IAB node from the source logical DU cell of the mobile IAB node to the target logical DU cell of the mobile IAB node based on the associated information, includes:
configuring the UE to perform a measurement on the target logical DU cell; and
determining to hand over the UE to the target logical DU cell of the mobile IAB node based on a measurement result.

In some embodiments, handing over the UE served by the mobile IAB node from the source logical DU cell of the mobile IAB node to the target logical DU cell of the mobile IAB node based on the associated information, includes:
determining to hand over the UE to the target logical DU cell based on a correspondence relationship or a co-location relationship between the target logical DU cell and the source logical DU cell.

In some embodiments, the target logical DU cell and the source logical DU cell have a same downlink frequency point, or the target logical DU cell and the source logical DU cell have different downlink frequency points.

In some embodiments, obtaining the associated information of the target logical DU cell of the mobile IAB node, includes:
obtaining the associated information sent by a source logical DU of the mobile IAB node via an F1AP message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

In some embodiments, the processor is further configured to read the computer program from the memory and perform operations of:
receiving a handover command for the UE from a target donor-CU of a target logical DU of the mobile IAB node; and
sending the handover command to the UE.

According to a fifth aspect, embodiments of the present disclosure provide a mobile IAB node. The mobile IAB node includes: a memory, a transceiver and a processor.

The memory is configured to store a computer program, the transceiver is configured to send and receive data under the control of the processor, and the processor is configured to read the computer program from the memory and perform operations of:
sending associated information of a target logical DU cell of the mobile IAB node, in which the associated information is used for handing over a UE served by the mobile IAB node from a source logical DU cell of the mobile IAB node to the target logical DU cell of the mobile IAB node.

In some embodiments, the processor is further configured to read the computer program from the memory and perform operations of:
determining a beam for the UE to perform an RACH-less handover in the target logical DU cell;
configuring SSBs corresponding to the beam and CG PUSCH resources for the SSBs, in which the PUSCH resources are used for the UE to send an initial uplink message for the RACH-less handover to the target logical DU cell; and
sending first configuration information to a target donor-CU of a target logical DU of the mobile IAB node via an F1AP message, in which the first configuration information indicates the SSBs corresponding to the beam and the CG PUSCH resources for the SSBs.

In some embodiments, the processor is further configured to read the computer program from the memory and perform operations of:
determining a beam for the UE to perform an RACH-less handover in the target logical DU cell; and
dynamically scheduling a CG PUSCH resource for the UE via a PDCCH associated with an SSB corresponding to the beam, in which the PUSCH resource is used for the UE to send an initial uplink message to the target logical DU cell.

In some embodiments, determining the beam for the UE to perform the RACH-less handover in the target logical DU cell includes:
determining the beam for the UE to perform the RACH-less handover in the target logical DU cell based on a measurement result of the UE for the target logical DU cell included in handover preparation information.

In some embodiments, determining the beam for the UE to perform the RACH-less handover in the target logical DU cell, includes:
determining a beam used by the UE in the source logical DU cell; and
determining the beam for the UE to perform the RACH-less handover in the target logical DU cell based on the beam used by the UE in the source logical DU cell.

In some embodiments, sending the associated information of the target logical DU cell of the mobile IAB node includes:
sending the associated information of the target logical DU cell of the mobile IAB node to a source donor-CU of a source logical DU of the mobile IAB node via the F1AP message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

According to a sixth aspect, embodiments of the present disclosure provide a UE. The UE includes: a memory, a transceiver and a processor.

The memory is configured to store a computer program, the transceiver is configured to send and receive data under the control of the processor, and the processor is configured to read the computer program from the memory and perform operations of:
determining a PUSCH resource for an SSB corresponding to a beam used for performing an RACH-less handover in a target cell; and
sending an initial uplink message to the target cell using the PUSCH resource.

In some embodiments, determining the PUSCH resource for the SSB corresponding to the beam used for performing the RACH-less handover in the target cell includes:
receiving a handover command containing first configuration information from a network device, in which the first configuration information indicates SSBs corresponding to the beam used for performing the RACH-less handover in the target cell and CG PUSCH resources for the SSBs; and
selecting an SSB corresponding to the beam used for performing the RACH-less handover in the target cell and determining the PUSCH resource for the SSB based on the first configuration information.

In some embodiments, determining the PUSCH resource for the SSB corresponding to the beam used for performing the RACH-less handover in the target cell includes:
receiving a handover command not containing first configuration information from a network device, in which the first configuration information indicates SSBs corresponding to the beam used for performing the RACH-less handover in the target cell and CG PUSCH resources for the SSBs; and
determining that an SSB corresponding to a PDCCH used by the target cell for scheduling for the UE is the SSB corresponding to the beam used for performing the RACH-less handover in the target cell, detecting the PDCCH used by the target cell for scheduling for the UE, and determining a PUSCH resource scheduled by the PDCCH.

In some embodiments, the handover command further includes second configuration information, and the second configuration information indicates an SSB reception power threshold for the UE to select the SSB; and
selecting the SSB corresponding to the beam used for performing the RACH-less handover in the target cell includes:
selecting an SSB with reception power being greater than the SSB reception power threshold among the SSBs indicated in the first configuration information as the SSB corresponding to the beam used for performing the RACH-less handover in the target cell; or
selecting an SSB corresponding to the PDCCH with reception power being greater than the SSB reception power threshold as the SSB corresponding to the beam used for performing the RACH-less handover in the target cell.

In some embodiments, the processor is further configured to read the computer program from the memory and perform an operation of:
initiating a random access procedure to access the target cell, in a case that reception power of the SSBs indicated in the first configuration information is less than the SSB reception power threshold, or the reception power of the SSB corresponding to the PDCCH is less than the SSB reception power threshold.

According to a seventh aspect, embodiments of the present disclosure provide a handover apparatus. The handover apparatus includes:
an obtaining module, configured to obtain associated information of a target logical DU cell of a mobile IAB node; and
a handover module, configured to hand over a UE served by the mobile IAB node from a source logical DU cell of the mobile IAB node to the target logical DU cell of the mobile IAB node based on the associated information.

In some embodiments, the handover module includes a configuring unit and a first handover unit,
the configuring unit is configured to configure the UE to perform a measurement on the target logical DU cell, and
the first handover unit is configured to determine to hand over the UE to the target logical DU cell of the mobile IAB node based on a measurement result.

In some embodiments, the handover module includes:
a second handover unit, configured to determine to hand over the UE to the target logical DU cell based on a correspondence relationship or a co-location relationship between the target logical DU cell and the source logical DU cell.

In some embodiments, the target logical DU cell and the source logical DU cell have a same downlink frequency point, or the target logical DU cell and the source logical DU cell have different downlink frequency points.

In some embodiments, the obtaining module is further configured to:
obtain the associated information sent by a source logical DU of the mobile IAB node via an F1AP message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

In some embodiments, the apparatus further includes:
a receiving module, configured to receive a handover command for the UE from a target donor-CU of a target logical DU of the mobile IAB node; and
a third sending module, configured to send the handover command to the UE.

According to an eighth aspect, embodiments of the present disclosure provide a handover apparatus. The handover apparatus includes:
a first sending module, configured to send associated information of a target logical DU cell of a mobile IAB node, in which the associated information is used for handing over a UE served by the mobile IAB node from a source logical DU cell of the mobile IAB node to the target logical DU cell of the mobile IAB node.

In some embodiments, the apparatus further includes:
a second determining module, configured to determine a beam for the UE to perform an RACH-less handover in the target logical DU cell;
a configuring module, configured to configure SSBs corresponding to the beam and CG PUSCH resources for the SSB, in which the PUSCH resources are used for the UE to send an initial uplink message for the RACH-less handover to the target logical DU cell; and
a fourth sending module, configured to send first configuration information to a target donor-CU of a target logical DU of the mobile IAB node via an F1AP message, in which the first configuration information indicates the SSBs corresponding to the beam and the CG PUSCH resources for the SSBs.

In some embodiments, the apparatus further includes:
a second determining module, configured to determine a beam for the UE to perform an RACH-less handover in the target logical DU cell; and
a scheduling module, configured to dynamically schedule a CG PUSCH resource for the UE via a PDCCH associated with an SSB corresponding to the beam, in which the PUSCH resource is used for the UE to send an initial uplink message to the target logical DU cell.

In some embodiments, the second determining module includes a first determining unit.

The first determining unit is configured to determine the beam for the UE to perform the RACH-less handover in the target logical DU cell based on a measurement result of the UE for the target logical DU cell included in handover preparation information.

In some embodiments, the second determining module includes a second determining unit and a third determining unit,
the second determining unit is configured to determine a beam used by the UE in the source logical DU cell, and
the third determining unit is configured to determine the beam for the UE to perform the RACH-less handover in the target logical DU cell based on the beam used by the UE in the source logical DU cell.

In some embodiments, the first sending module is further configured to:
send the associated information of the target logical DU cell of the mobile IAB node to a source donor-CU of a source logical DU of the mobile IAB node via the F1AP message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

According to a ninth aspect, embodiments of the present disclosure provide a handover apparatus. The handover apparatus includes:
a first determining module, configured to determine a PUSCH resource for an SSB corresponding to a beam used for performing an RACH-less handover in a target cell; and
a second sending module, configured to send an initial uplink message to the target cell using the PUSCH resource.

In some embodiments, the first determining module includes a receiving unit and a fourth determining unit,
the receiving unit is configured to receive a handover command containing first configuration information from a network device, in which the first configuration information indicates SSBs corresponding to the beam used for performing the RACH-less handover in the target cell and CG PUSCH resources for the SSBs, and
the fourth determining unit is configured to select an SSB corresponding to the beam used for performing the RACH-less handover in the target cell and determine the PUSCH resource for the SSB based on the first configuration information.

In some embodiments, the first determining module includes a receiving unit and a fifth determining unit,
the receiving unit is further configured to receive a handover command not containing first configuration information from a network device, in which the first configuration information indicates SSBs corresponding to the beam used for performing the RACH-less handover in the target cell and CG PUSCH resources for the SSBs, and
the fifth determining unit is configured to determine that an SSB corresponding to a PDCCH used by the target cell for scheduling for the UE is the SSB corresponding to the beam used for performing the RACH-less handover in the target cell, detecting the PDCCH used by the target cell for scheduling for the UE, and determining a PUSCH resource scheduled by the PDCCH.

In some embodiments, the handover command further includes second configuration information, and the second configuration information indicates an SSB reception power threshold for the UE to select the SSB; and
the fourth determining unit is further configured to:
select an SSB with reception power being greater than the SSB reception power threshold among the SSBs indicated in the first configuration information as the SSB corresponding to the beam used for performing the RACH-less handover in the target cell; or
select an SSB corresponding to the PDCCH with reception power being greater than the SSB reception power threshold as the SSB corresponding to the beam used for performing the RACH-less handover in the target cell.

In some embodiments, the apparatus further includes: an initiating module; and
the initiating module is configured to initiate a random access procedure to access the target cell, in a case that reception power of the SSBs indicated in the first configuration information is less than the SSB reception power threshold, or the reception power of the SSB corresponding to the PDCCH is less than the SSB reception power threshold.

According to a tenth aspect, embodiments of the present disclosure provide a non-transitory readable storage medium. The non-transitory readable storage medium stores a computer program, and the computer program is configured to cause a processor to implement the handover method described above in the first aspect, the second aspect or the third aspect.

According to an eleventh aspect, embodiments of the present disclosure provide a processor-readable storage medium. The processor-readable storage medium stores a computer program, and the computer program is configured to cause a processor to implement the handover method described above in the first aspect, the second aspect or the third aspect.

According to a twelfth aspect, embodiments of the present disclosure provide a computer-readable storage medium. The computer-readable storage medium stores a computer program, and the computer program is configured to cause a computer to implement the handover method described above in the first aspect, the second aspect or the third aspect.

According to a thirteenth aspect, embodiments of the present disclosure provide a communication device. The communication device stores a computer program, and the computer program is configured to cause the communication device to implement the handover method described above in the first aspect, the second aspect or the third aspect.

According to a fourteenth aspect, embodiments of the present disclosure provide a chip product. The chip product stores a computer program, and the computer program is configured to cause the chip product to implement the handover method described above in the first aspect, the second aspect or the third aspect.

According to the handover method and apparatus, and the storage medium provided in the present disclosure, the source logical DU of the mobile IAB node reports the associated information of the target logical DU cell of the mobile IAB node to the source donor-CU of the source logical DU of the mobile IAB node, so that the source donor-CU of the source logical DU of the mobile IAB node obtains the target cell to which the UE is handed over in time, thereby achieving the handover of the UE between IAB logical DUs.

### BRIEF DESCRIPTION OF THE DRAWINGS

To more clearly illustrate the technical solution in the embodiments of the present disclosure or the related art, the drawings used for describing the embodiments or the related art are briefly introduced below. Obviously, the drawings described below are some embodiments of the present disclosure. For those skilled in the art, other drawings may be derived from these drawings without inventive work.
FIG. 1 is a schematic diagram of an integrated access and backhaul (IAB) system.
FIG. 2 is a schematic diagram of an IAB network architecture.
FIG. 3 is a schematic diagram of a parent IAB-node and a child IAB-node.
FIG. 4 is a schematic diagram of an F1-U protocol stack in the IAB system.
FIG. 5 is a schematic diagram of an F1-C protocol stack in the IAB system.
FIG. 6 is a schematic diagram of a routing function in the IAB system.
FIG. 7 is a schematic diagram of an IAB-DU migration procedure.
FIG. 8 is a flowchart of a handover method provided by an embodiment of the present disclosure.
FIG. 9 is a flowchart of another handover method provided by an embodiment of the present disclosure.
FIG. 10 is a flowchart of yet another handover method provided by an embodiment of the present disclosure.
FIG. 11 is a schematic diagram of a handover principle provided by an embodiment of the present disclosure.
FIG. 12 is a schematic diagram of another handover principle provided by an embodiment of the present disclosure.
FIG. 13 is a schematic structural diagram of a source donor-CU of a source logical DU of a mobile IAB node provided by an embodiment of the present disclosure.
FIG. 14 is a schematic structural diagram of a mobile IAB node provided by an embodiment of the present disclosure.
FIG. 15 is a schematic structural diagram of a UE provided by an embodiment of the present disclosure.
FIG. 16 is a schematic structural diagram of a handover apparatus provided by an embodiment of the present disclosure.
FIG. 17 is a schematic structural diagram of another handover apparatus provided by an embodiment of the present disclosure.
FIG. 18 is a schematic structural diagram of yet another handover apparatus provided by an embodiment of the present disclosure.

### DETAILED DESCRIPTION

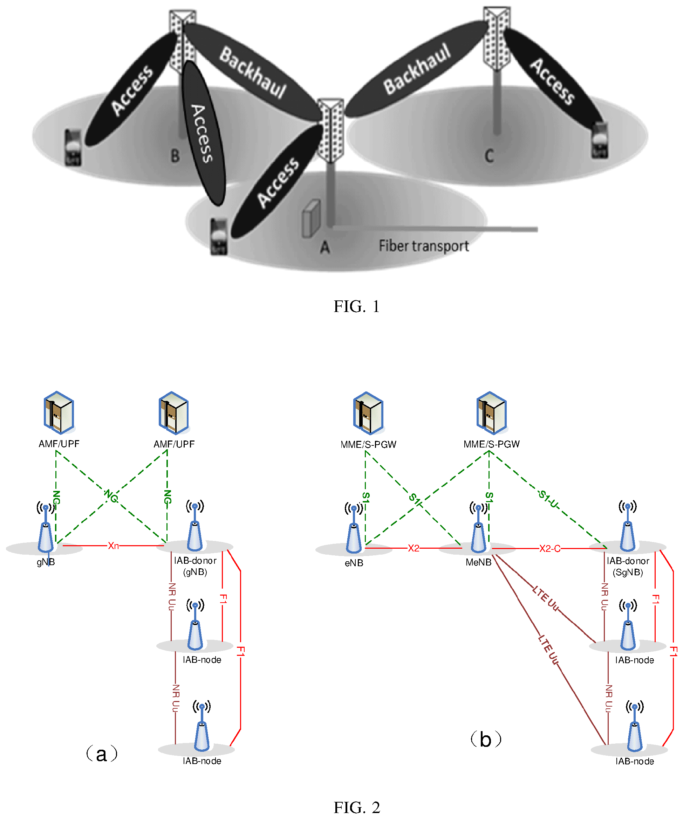

Future seamless cellular network deployment requires highly-flexible and ultra-density new radio (NR) cell deployment. Achieving an ultra-density network is one of the objectives of the 5th generation mobile communication (5G), and deploying an NR network without wired backhaul is crucial for realizing the ultra-density network of 5G. Due to a reduced cell coverage caused by a 5G millimeter wave, a wireless self-backhaul system needs to possess a multi-hop capability to meet deployment requirements. High bandwidth, massive multiple input multiple output (MIMO), and beam system of 5G make it easier than long term evolution (LTE) to develop the wireless self-backhaul system for the ultra-density NR cell. To develop such multi-hop system with wireless self-backhaul, the 3rd generation partnership project (3GPP) R16 has started research and standardization of an Integrated access and backhaul (IAB) for NR. FIG. 1 is a schematic diagram of an IAB system. As illustrated in FIG. 1, Uu air interface radio transmission of NR is used for access and backhaul, and a relay node simultaneously supports both access and backhaul functions. The relay node multiplexes an access link and a backhaul link in a time domain, a frequency domain or a space domain, and the access link and the backhaul link may use the same frequency band or different frequency bands.

FIG. 2 is a schematic diagram of an IAB network architecture. FIG. 2(a) is an IAB architecture in a standalone (SA) mode, and FIG. 2(b) is an IAB architecture in an E-UTRA-NR Dual Connectivity (EN-DC) mode. A relay node refers to an IAB-node that simultaneously supports both access and backhaul functions. A last-hop access node at a network side is called an IAB-donor that supports a gNB function and supports IAB-node access. All UE data may be backhauled to the IAB-donor via the IAB-node in one or more hops.

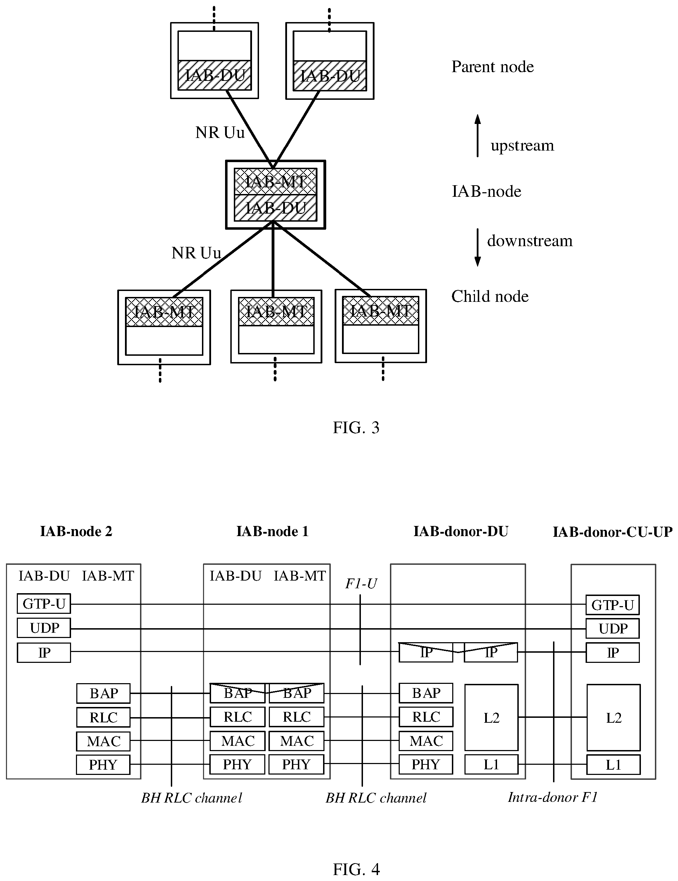

FIG. 3 is a schematic diagram of a parent IAB-node and a child IAB-node. As illustrated in FIG. 3, the function of an IAB-node is divided into two parts. One part is a gNB-DU function, called IAB-DU, and the other part is a UE function, called IAB-MT. The IAB-DU implements a function of a network-side device, serves one or more cells, and is connected to a downstream child IAB-node. The IAB-DU provides NR interface access for the UE and the downstream child IAB-node, and establishes an F1 connection with an IAB donor-CU. The IAB-MT implements a partial function of a terminal, and is connected to an upstream parent IAB-node or an IAB-donor DU. The IAB-MT includes functions of a physical layer, a Layer 2, and a radio resource control (RRC) and non-access stratum (NAS) layer, and is indirectly connected to the IAB donor-CU and a core network. The IAB-node may access the network in the SA mode or the EN-DC mode.

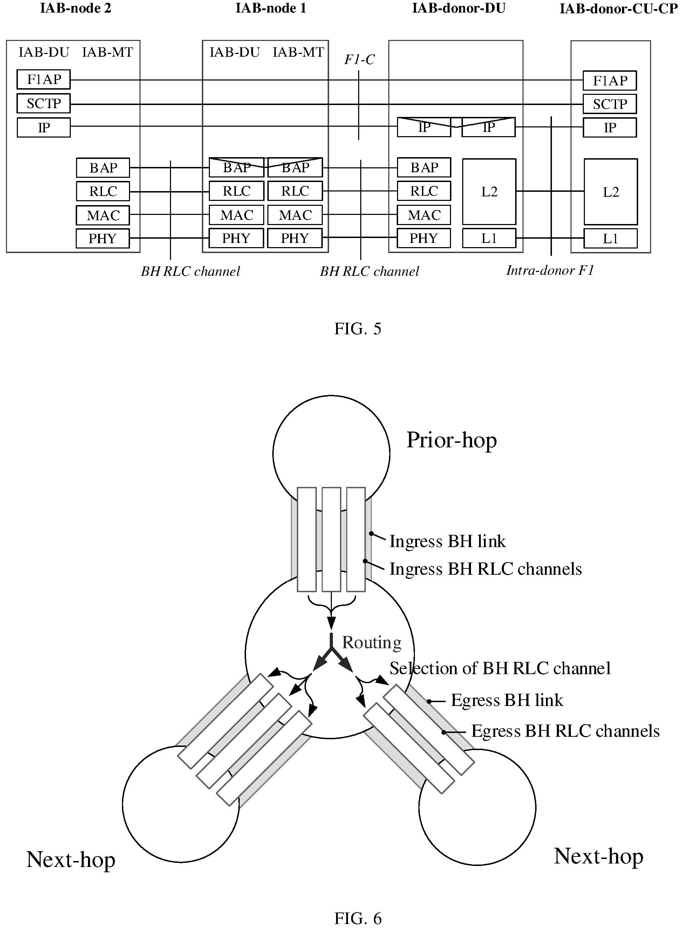

FIG. 4 is a schematic diagram of an F1 user plane (F1-U) protocol stack in the IAB system. FIG. 5 is a schematic diagram of an F1 control plane (F1-C) protocol stack in the IAB system. As illustrated in FIG. 4 and FIG. 5, the F1-U and the F1-C are established on a transport (IP) layer between the IAB-DU and the IAB-donor-CU. The figures illustrate two-hop wireless backhaul and one-hop wired backhaul. On a backhaul link, the IP layer is carried on a backhaul adaptation protocol (BAP) sub-layer. A BAP entity in the IAB-node implements a routing function in the IAB system, and the IAB-donor CU provides a routing table. A BAP protocol data unit (PDU) is transmitted in a radio link control (RLC) channel of the backhaul link. A plurality of RLC channels of the backhaul link may be configured by the IAB-donor to traffics with different priorities and Quality of Services (QoS). The BAP PDU is mapped by the BAP entity to different backhaul RLC channels.

FIG. 6 is a schematic diagram of a routing function of the IAB system. As illustrated in FIG. 6, the routing function of the IAB system is implemented by a BAP layer. Each IAB node stores a BH routing configuration and a BH RLC channel mapping configuration. A BAP entity performs routing according to the BH routing configuration, the BH RLC channel mapping configuration, and a routing identifier (ID) of a BAP layer data packet header. The routing ID contains a target BAP address and a path ID.

The BH routing configuration contains a mapping relationship between the routing ID and a next-hop node address. The BH RLC channel mapping configuration contains a mapping relationship between a prior-hop address, an ingress RLC channel ID, a next-hop address and an egress RLC channel ID. For each data packet, a next-hop address may be found from the routing configuration using the routing ID of the packet header. Both the prior-hop address and the ingress RLC channel ID are known. Thus, once the next-hop address is determined, the egress RLC channel ID may be found from the BH RLC channel mapping configuration according to the prior-hop address+the ingress RLC channel ID+ the next-hop address.

NR R18 has started to discuss a mobile IAB node to enhance the support for mobility scenarios, for example, the mobile IAB node is installed on a vehicle traveling at a high/low speed, to provide a service for a user on the vehicle. The R18 first determines it is required to support a continuous IAB-MT handover scenario, and to support the handover of the IAB-MT between two non-F1-terminating donor-CUs without changing a donor-CU of an IAB-DU, which is also referred to as an IAB-MT migration procedure. However, when the donor-CU of the IAB-DU remains unchanged (i.e., an F1-terminating donor-CU remains unchanged), F1 traffic always need to be transferred from an IAB-MT topology domain to the donor-CU of the IAB-DU. If the mobile IAB node has a wide active range, and a donor-CU of the IAB-MT is at a distance from the donor-CU of the IAB-DU, it will bring a traffic transmission delay. Therefore, the R18 determines that it is required to support changing the F1-terminating donor-CU, also known as IAB-DU migration.

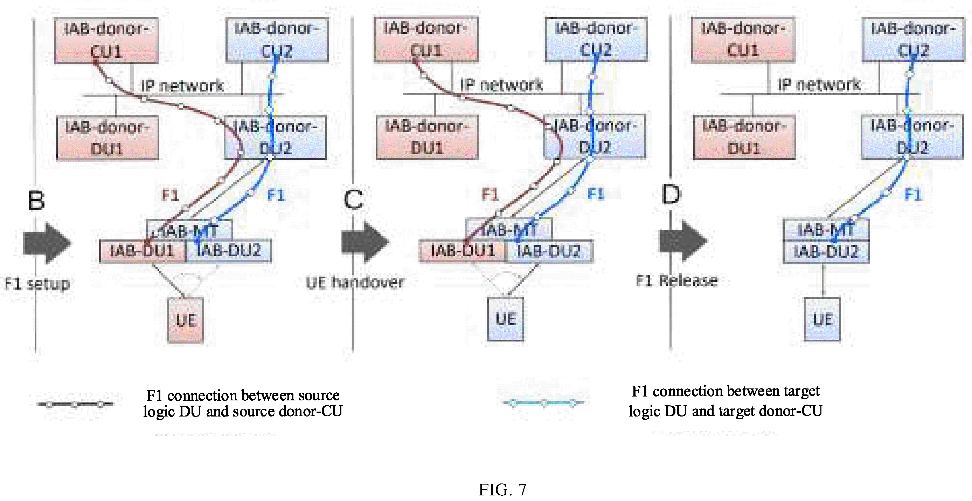

FIG. 7 is a schematic diagram of an IAB-DU migration procedure. As illustrated in FIG. 7, during IAB-DU migration, a donor-CU of an IAB-DU is changed from a source donor-CU to a target donor-CU. When executing the procedure, the IAB node is required to implement functions of two logical DUs. The target logical DU of the IAB node establishes an F1 connection with the target donor-CU, while the source logical DU of the IAB node still keeps an original F1 connection with the source donor-CU. Through these two logical DUs and their corresponding F1 connections, a UE served by the IAB node is handed over from the source donor-CU and the source logical DU to the target donor-CU and the target logical DU. Then, the source logical DU of the IAB node releases the F1 connection with the source donor-CU. Since a source logical DU cell and a target logical DU cell are co-located, theoretically, the UE has the same timing advance (TA) for the two cells, thereby supporting random access channel (RACH)-less handover.

Problem 1: after the IAB-DU migration, the source logical DU needs to release the F1 connection with the source donor-CU, and the UE served by the source logical DU needs to be handed over to another cell. According to the related art, the source donor-CU may determine a target cell to which the UE is handed over according to measurement report results of neighboring cells of the UE. When the source logical DU cell and the target logical DU cell use different downlink frequency points, the source logical DU cell and the target logical DU cell may be activated simultaneously. Therefore, when the target logical DU cell is activated, the UE can still be connected to the source logical DU. The UE may measure signal quality of the target logical DU cell and report the signal quality to the source donor-CU, so that the source donor-CU determines whether to hand over to the target logical DU cell. However, when the source logical DU cell and the target logical DU cell use the same downlink frequency point, the source logical DU cell and the target logical DU cell cannot be activated simultaneously. Therefore, the UE served by the source logical DU cannot measure the signal quality of the target logical DU cell, and thus the source donor-CU cannot determine the target cell to which the UE is handed over.

Problem 2: In a LTE RACH-less handover, a target base station determines to perform the RACH-less handover for the UE according to an operation administration and maintenance (OAM) configuration, for example, according to source and target cell IDs of the OAM configuration that allows to perform the RACH-less handover. If the RACH-less handover is performed, the target base station configures a TA in a UE handover command for the UE to send an initial uplink message in a target cell and pre-configures a type-1 CG physical uplink shared channel (PUSCH) resource for initial uplink transmission, or the target cell dynamically schedules a PUSCH resource for transmission for the UE via a physical downlink control channel (PDCCH). During the handover of the UE, a random access process is skipped, the initial uplink message is sent in the target cell using the TA configured in the handover command, and the pre-configured PUSCH resource or the PUSCH resource dynamically scheduled via the PDCCH. However, unlike the LTE RACH-less handover, in an NR RACH-less handover, the UE needs to select a beam to use when handing over to the target cell, but the related art does not provide any method for the UE on how to select the beam for the RACH-less handover.

Regarding the above technical problems, the present disclosure provides a handover method, a handover apparatus, and a storage medium. A source logical DU of a mobile IAB node reports associated information of a target logical DU cell of the mobile IAB node to a source donor-CU of the source logical DU of the mobile IAB node, so that the source donor-CU of the source logical DU of the mobile IAB node can obtain a target cell to which the UE is handed over in time, thereby achieving the handover of the UE between the IAB logical DUs.

To make the objectives, technical solutions and advantages of the embodiments of the present disclosure clearer, the technical solutions of the embodiments of the present disclosure will be described clearly and fully below with reference to the accompanying drawings of the embodiments of the present disclosure. Obviously, the described embodiments are only some embodiments of the present disclosure, not all of them. Based on the embodiments of the present disclosure, all other embodiments obtained by those skilled in the art without inventive work shall fall within the protection scope of the present disclosure.

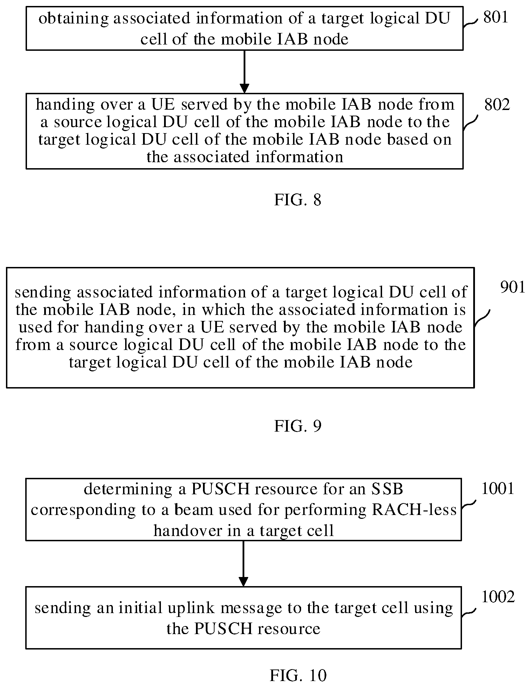

FIG. 8 is a flowchart of a handover method provided by an embodiment of the present disclosure. As illustrated in FIG. 8, the embodiment of the present disclosure provides a handover method, and an execution entity of the method is a source donor-CU of a source logical DU of a mobile IAB node. The method includes the following steps.

At step 801, associated information of a target logical DU cell of the mobile IAB node is obtained.

In detail, in the embodiment of the present disclosure, the source logical DU of the mobile IAB node reports the associated information of the target logical DU cell of the mobile IAB node to the source donor-CU of the source logical DU of the mobile IAB node.

The associated information is used for handing over a UE served by the mobile IAB node from a source logical DU cell of the mobile IAB node to the target logical DU cell of the mobile IAB node.

The source donor-CU of the source logical DU of the mobile IAB node obtains the associated information of the target logical DU cell of the mobile IAB node.

For example, the source donor-CU of the source logical DU of the mobile IAB node obtains the associated information sent by the source logical DU of the mobile IAB node via an F1 application protocol (F1AP) message.

For example, the source donor-CU of the source logical DU of the mobile IAB node obtains the associated information sent by the source logical DU of the mobile IAB node via a GNB-DU CONFIGURATION UPDATE message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

At step 802, a UE served by the mobile IAB node is switched from a source logical DU cell of the mobile IAB node to the target logical DU cell of the mobile IAB node based on the associated information.

In detail, in the embodiment of the present disclosure, after the source donor-CU of the source logical DU of the mobile IAB node obtains the associated information of the target logical DU cell of the mobile IAB node, the UE served by the mobile IAB node is handed over from the source logical DU cell of the mobile IAB node to the target logical DU cell of the mobile IAB node based on the associated information.

In some embodiments, handing over the UE served by the mobile IAB node from the source logical DU cell of the mobile IAB node to the target logical DU cell of the mobile IAB node based on the associated information, includes:
configuring the UE to perform a measurement on the target logical DU cell; and
determining to hand over the UE to the target logical DU cell of the mobile IAB node based on a measurement result.

In detail, in the embodiment of the present disclosure, if the target logical DU cell and its co-located source logical DU cell have different downlink frequency points, the source donor-CU may configure the UE to perform the measurement on the target logical DU cell according to sounding reference signal configuration information of the target logical DU cell reported by the IAB node. The source donor-CU determines to hand over the UE served by the mobile IAB node to the target logical DU cell according to the measurement result of the UE for the target logical DU cell. Alternatively, the source donor-CU may determine to hand over the UE to the target logical DU cell according to a co-location relationship between the target logical DU cell and the source logical DU cell.

In some embodiments, handing over the UE served by the mobile IAB node from the source logical DU cell of the mobile IAB node to the target logical DU cell of the mobile IAB node based on the associated information, includes:
determining to hand over the UE to the target logical DU cell based on a correspondence relationship or a co-location relationship between the target logical DU cell and the source logical DU cell.

In detail, in the embodiment of the present disclosure, in a case that the target logical DU cell and its co-located source logical DU cell have the same downlink frequency point, since the target logical DU cell and the source logical DU cell cannot operate simultaneously, the source donor-CU cannot obtain the measurement result of the UE for the target logical DU cell. Therefore, the source donor-CU may only determine to hand over the UE served by the mobile IAB node from the source logical DU cell to the target logical DU cell according to the co-location relationship between the target logical DU cell and the source logical DU cell.

In some embodiments, the target logical DU cell and the source logical DU cell have the same downlink frequency point, or the target logical DU cell and the source logical DU cell have different downlink frequency points.

In some embodiments, the method further includes:
receiving a handover command for the UE from a target donor-CU of a target logical DU of the mobile IAB node; and
sending the handover command to the UE.

In detail, in the embodiment of the present disclosure, the source donor-CU of the source logical DU of the mobile IAB node receives the handover command for the UE from the target donor-CU of the target logical DU of the mobile IAB node.

Then, the source donor-CU of the source logical DU of the mobile IAB node sends the handover command to the UE.

The source donor-CU of the source logical DU of the mobile IAB node may determine whether the target logical DU cell and its co-located source logical DU cell have the same downlink frequency point. If there is an Xn interface between the source donor-CU and the target donor-CU, the source donor-CU may obtain the associated information of the target logical DU cell via an XnAP. This method is implementable with or without the Xn interface. That is, even when there is no Xn interface between the source donor-CU and the target donor-CU, the source donor-CU can still obtain the associated information of the target logical DU cell.

According to the handover method provided by the present disclosure, the source logical DU of the mobile IAB node reports the associated information of the target logical DU cell of the mobile IAB node to the source donor-CU of the source logical DU of the mobile IAB node, so that the source donor-CU of the source logical DU of the mobile IAB node can obtain the target cell to which the UE is handed over in time, thereby achieving the handover of the UE between the IAB logical DUs.

FIG. 9 is a flowchart of another handover method provided by an embodiment of the present disclosure. As illustrated in FIG. 9, the embodiment of the present disclosure provides a handover method, and an execution entity of the method is a mobile IAB node. The method includes the following steps.

At step 901, associated information of a target logical DU cell of the mobile IAB node is sent, in which the associated information is used for handing over a UE served by the mobile IAB node from a source logical DU cell of the mobile IAB node to the target logical DU cell of the mobile IAB node.

In detail, in the embodiment of the present disclosure, the source logical DU of the mobile IAB node reports the associated information of the target logical DU cell of the mobile IAB node to a source donor-CU of the source logical DU of the mobile IAB node.

The associated information is used for handing over the UE served by the mobile IAB node from the source logical DU cell of the mobile IAB node to the target logical DU cell of the mobile IAB node.

The source donor-CU of the source logical DU of the mobile IAB node obtains the associated information of the target logical DU cell of the mobile IAB node.

According to the handover method provided by the present disclosure, the source logical DU of the mobile IAB node reports the associated information of the target logical DU cell of the mobile IAB node to the source donor-CU of the source logical DU of the mobile IAB node, so that the source donor-CU of the source logical DU of the mobile IAB node can obtain the target cell to which the UE is handed over in time, thereby achieving the handover of the UE between the IAB logical DUs.

In some embodiments, the method further includes:
determining a beam for the UE to perform an RACH-less handover in the target logical DU cell;
configuring SSBs corresponding to the beam and CG PUSCH resources for the SSBs, in which the PUSCH resources are used for the UE to send an initial uplink message for the RACH-less handover to the target logical DU cell; and
sending first configuration information to a target donor-CU of a target logical DU of the mobile IAB node via an F1AP message, in which the first configuration information indicates the SSBs corresponding to the beam and the CG PUSCH resources for the SSBs.

In detail, in the embodiment of the present disclosure, the target logical DU of the mobile IAB node also needs to determine the beam for the UE to perform the RACH-less handover in the target logical DU cell, and directly pre-configure the corresponding SSB for the beam and the CG PUSCH resource for the SSB.

After the target logical DU of the mobile IAB node determines the beam for the UE to perform the RACH-less handover in the target logical DU cell, the SSBs corresponding to the beam and the CG PUSCH resources for the SSBs are configured. The PUSCH resources are used by the UE to send the initial uplink message for the RACH-less handover to the target logical DU cell.

The target logical DU of the mobile IAB node sends the SSBs corresponding to the beam and the CG PUSCH resources for the SSBs to the target donor-CU of the target logical DU of the mobile IAB node.

For example, the target logical DU of the mobile IAB node may send an F1AP message to the target donor-CU of the target logical DU of the mobile IAB node. The F1AP message carries first configuration information, which indicates the SSBs corresponding to the beam and the CG PUSCH resources for the SSBs.

For example, the target logical DU of the mobile IAB node determines an SSB used for the RACH-less handover for the UE and preconfigures a type-1 CG PUSCH resource corresponding to the SSB. The target logical DU of the mobile IAB node generates ReconfigurationWithSync information containing the preconfigured PUSCH resource information for the SSB, and sends the ReconfigurationWithSync information to the UE via a handover command. Correspondingly, the UE receives the handover command containing the ReconfigurationWithSync information. The ReconfigurationWithSync information contains the preconfigured PUSCH resource. The UE selects the SSB corresponding to the preconfigured PUSCH resource, and uses the PUSCH resource and the TA of the source logical DU cell to send an initial uplink message to the target logical DU cell of the mobile IAB node.

In the embodiment of the present disclosure, the preconfigured PUSCH resource in the handover command is bound to the SSB. The network may determine the SSB selected by the UE based on the PUSCH selected by the UE according to the preconfigured PUSCH resource. Therefore, even if the RACH procedure is skipped, the initial selection of the SSB in the target cell to which the UE is handed over can be achieved.

According to the handover method provided by the present disclosure, the source logical DU of the mobile IAB node reports the associated information of the target logical DU cell of the mobile IAB node to the source donor-CU of the source logical DU of the mobile IAB node, so that the source donor-CU of the source logical DU of the mobile IAB node can obtain the target cell to which the UE is handed over in time, thereby achieving the handover of the UE between the IAB logical DUs.

In some embodiments, the method further includes:
determining a beam for the UE to perform an RACH-less handover in the target logical DU cell; and
dynamically scheduling a CG PUSCH resource for the UE via a PDCCH associated with an SSB corresponding to the beam, in which the PUSCH resource is used for the UE to send an initial uplink message to the target logical DU cell.

In detail, in the embodiment of the present disclosure, the target logical DU of the mobile IAB node also needs to determine the beam for the UE to perform the RACH-less handover in the target logical DU cell, and dynamically schedule the CG PUSCH resource for the UE via the PDCCH.

After the target logical DU of the mobile IAB node determines the beam used for performing RACH-less handover for the UE in the target logical DU cell, the target logical DU dynamically schedules the CG PUSCH resource for the UE via the PDCCH associated with the SSB corresponding to that beam. The PUSCH resource is used for the UE to send the initial uplink message for the RACH-less handover to the target logical DU cell.

For example, the target logical DU of the mobile IAB node determines the SSB to perform the RACH-less handover for the UE and dynamically schedules the PUSCH resource for the UE via the PDCCH corresponding to that SSB. The target logical DU of the mobile IAB node generates ReconfigurationWithSync information and sends it to the UE via the handover command. The UE receives the handover command containing the ReconfigurationWithSync information. The ReconfigurationWithSync information does not contain a preconfigured type-1 CG PUSCH resource. The UE detects the PDCCH of the target logical DU cell, selects the SSB corresponding to the PDCCH for scheduling for the UE, and uses the PUSCH resource scheduled via the PDCCH and the TA of the source logical DU cell to send the initial uplink message to the target logical DU cell.

According to the handover method provided by the present disclosure, the source logical DU of the mobile IAB node reports the associated information of the target logical DU cell of the mobile IAB node to the source donor-CU of the source logical DU of the mobile IAB node, so that the source donor-CU of the source logical DU of the mobile IAB node can obtain the target cell to which the UE is handed over in time, thereby achieving the handover of the UE between the IAB logical DUs.

In some embodiments, the handover command further includes second configuration information, and the second configuration information indicates an SSB reception power threshold for the UE to select the SSB.

For example, the preconfigured PUSCH resource information for the SSB includes the SSB reception power threshold for the UE to select the SSB.

In detail, after the target logical DU of the mobile IAB node configures the SSBs corresponding to the beam and the CG PUSCH resources for that SSBs, the UE selects an SSB with reception power being greater than the SSB reception power threshold from the SSBs indicated in the first configuration information as the SSB corresponding to the beam used for performing the RACH-less handover in the target cell.

In the case where the target logical DU of the mobile IAB node dynamically schedules the CG PUSCH resource for the UE to use via the PDCCH, the UE selects an SSB corresponding to the PDCCH with reception power being greater than the SSB reception power threshold as the SSB corresponding to the beam used for performing the RACH-less handover in the target cell.

In the present disclosure, the PUSCH resource dynamically scheduled by the PDCCH is bound to the SSB, and thus the network can know the SSB selected by the UE based on the PUSCH used by the UE. Therefore, even if the RACH procedure is skipped, the initial selection of the SSB in the target cell to which the UE is handed over can be achieved.

According to the handover method provided by the present disclosure, the source logical DU of the mobile IAB node reports the associated information of the target logical DU cell of the mobile IAB node to the source donor-CU of the source logical DU of the mobile IAB node, so that the source donor-CU of the source logical DU of the mobile IAB node can obtain the target cell to which the UE is handed over in time, thereby achieving the handover of the UE between the IAB logical DUs.

In some embodiments, determining the beam for the UE to perform the RACH-less handover in the target logical DU cell includes:
determining the beam for the UE to perform the RACH-less handover in the target logical DU based on a measurement result of the UE for the target logical DU cell included in handover preparation information.

In detail, in the embodiment of the present disclosure, the target logical DU of the mobile IAB node determines the beam used for performing the RACH-less handover for the UE in the target logical DU based on the measurement result of the UE for the target logical DU cell included in the handover preparation information.

For example, the target logical DU of the mobile IAB node determines the SSB for performing the RACH-less handover for the UE according to a cell measurement result (a measurement result for the SSB/a channel state information reference signal (CSI-RS)) in the handover preparation information.

According to the handover method provided by the present disclosure, the source logical DU of the mobile IAB node reports the associated information of the target logical DU cell of the mobile IAB node to the source donor-CU of the source logical DU of the mobile IAB node, so that the source donor-CU of the source logical DU of the mobile IAB node can obtain the target cell to which the UE is handed over in time, thereby achieving the handover of the UE between the IAB logical DUs.

In some embodiments, determining the beam for the UE to perform the RACH-less handover in the target logical DU cell includes:
determining a beam used by the UE in the source logical DU cell; and
determining the beam for the UE to perform the RACH-less handover in the target logical DU cell based on the beam used by the UE in the source logical DU cell.

In detail, in the embodiment of the present disclosure, the target logical DU of the mobile IAB node first determines the beam used by the UE in the source logical DU cell, and then determines the beam for the UE to perform the RACH-less handover in the target logical DU cell based on the correspondence relationship or the co-location relationship between beams of the source logical DU cell and the target logical DU cell.

For example, the target logical DU of the mobile IAB node determines, according to the beam used by the UE in the source logical DU cell and a quasi-co-location relationship between the SSB of the source logical DU cell and the SSB of the target logical DU cell, the SSB for the UE to perform the RACH-less handover.

As another example, the target logical DU of the mobile IAB node determines, according to the beam used by the UE in the source logical DU cell and a correspondence relationship between the SSB of the source logical DU cell and the SSB of the target logical DU cell, the SSB for the UE to perform the RACH-less handover.

According to the handover method provided by the present disclosure, the source logical DU of the mobile IAB node reports the associated information of the target logical DU cell of the mobile IAB node to the source donor-CU of the source logical DU of the mobile IAB node, so that the source donor-CU of the source logical DU of the mobile IAB node can obtain the target cell to which the UE is handed over in time, thereby achieving the handover of the UE between the IAB logical DUs.

FIG. 10 is a flowchart of yet another handover method provided by an embodiment of the present disclosure. As illustrated in FIG. 10, the embodiment of the present disclosure provides a handover method, and an execution entity of the method is a UE, such as a mobile phone. The method includes the following steps.

At step 1001, a PUSCH resource for an SSB corresponding to a beam used for performing RACH-less handover in a target cell is determined.

At step 1002, an initial uplink message is sent to the target cell using the PUSCH resource.

In detail, when a target logical DU of an mobile IAB node directly pre-configures the SSBs corresponding to the beam and the CG PUSCH resources for the SSBs via a handover command, the UE selects the SSB corresponding to the pre-configured PUSCH resource, and sends the initial uplink message to a target logical DU cell of the mobile IAB node based on the PUSCH resource and a TA of a source logical DU cell.

After the target logical DU of the mobile IAB node dynamically schedules a CG PUSCH resource for the UE via a PDCCH, the UE detects the PDCCH of the target logical DU cell, selects the SSB corresponding to the PDCCH used for scheduling for the UE, and sends the initial uplink message to the target logical DU cell based on the PUSCH resource scheduled by the PDCCH and the TA of the source logical DU cell.

According to the handover method provided by the present disclosure, the UE determines the PUSCH resource for the SSB corresponding to the beam used for performing the RACH-less handover in the target cell, and sends the initial uplink message to the target cell using the PUSCH resource. The method directly selects the PUSCH resource corresponding to the SSB to access the target cell and saves a random access procedure, thereby reducing a handover latency.

In some embodiments, determining the PUSCH resource for the SSB corresponding to the beam used for performing the RACH-less handover in the target cell, includes:
receiving a handover command containing first configuration information from a network device, in which the first configuration information indicates SSBs corresponding to the beam used for performing the RACH-less handover in the target cell and CG PUSCH resources for the SSBs; and
selecting the SSB corresponding to the beam used for performing the RACH-less handover in the target cell and determining the PUSCH resource for the SSB based on the first configuration information.

In detail, in the embodiment of the present disclosure, the target logical DU of the mobile IAB node directly pre-configures the SSB corresponding to the beam and the CG PUSCH resource for the SSB via the handover command.

The UE receives the handover command sent by the network device. The handover command contains the first configuration information, and the first configuration information indicates the SSBs corresponding to the beam used for performing the RACH-less handover in the target cell and the CG PUSCH resources for the SSBs.

The UE selects the SSB corresponding to the beam used for performing the RACH-less handover in the target cell and determines the PUSCH resource for the SSB based on the first configuration information, and sends the initial uplink message to the target logical DU cell of the mobile IAB node based on the PUSCH resource and the TA of the source logical DU cell.

According to the handover method provided by the present disclosure, the UE determines the PUSCH resource for the SSB corresponding to the beam used for performing the RACH-less handover in the target cell, and sends the initial uplink message to the target cell using the PUSCH resource. The method directly selects the PUSCH resource corresponding to the SSB to access the target cell and saves the random access procedure, thereby reducing the handover latency.

In some embodiments, determining the PUSCH resource for the SSB corresponding to the beam used for performing the RACH-less handover in the target cell, includes:
receiving a handover command not containing first configuration information from a network device, in which the first configuration information indicates the SSBs corresponding to the beam used for performing the RACH-less handover in the target cell and CG PUSCH resources for the SSBs; and
determining that an SSB corresponding to a PDCCH used by the target cell for scheduling for the UE is the SSB corresponding to the beam used for performing the RACH-less handover in the target cell, detecting the PDCCH used by the target cell for scheduling for the UE, and determining a PUSCH resource scheduled by the PDCCH.

In detail, in the embodiment of the present disclosure, the target logical DU of the mobile IAB node dynamically schedules the CG PUSCH resource for the UE via the PDCCH.

The UE receives the handover command sent by the network device, detects the PDCCH of the target logical DU cell and selects the SSB corresponding to the PDCCH as the SSB corresponding to the beam used for performing the RACH-less handover in the target cell, determines the PUSCH resource scheduled by the PDCCH, and sends the initial uplink message to the target logical DU cell using the PUSCH resource scheduled by the PDCCH and the TA of the source logical DU cell.

According to the handover method provided by the present disclosure, the UE determines the PUSCH resource for the SSB corresponding to the beam used for performing the RACH-less handover in the target cell, and sends the initial uplink message to the target cell using the PUSCH resource. The method directly selects the PUSCH resource corresponding to the SSB to access the target cell and saves the random access procedure, thereby reducing the handover latency.

In some embodiments, the handover command further includes second configuration information, and the second configuration information indicates an SSB reception power threshold for the UE to select the SSB; and
selecting the SSB corresponding to the beam used for performing the RACH-less handover in the target cell includes:
selecting an SSB with reception power being greater than the SSB reception power threshold among the SSBs indicated in the first configuration information as the SSB corresponding to the beam used for performing the RACH-less handover in the target cell; or
selecting an SSB corresponding to the PDCCH with reception power being greater than the SSB reception power threshold as the SSB corresponding to the beam used for performing the RACH-less handover in the target cell.

In detail, in the embodiment of the present disclosure, the handover command also contains the second configuration information, which indicates the SSB reception power threshold for the UE to select the SSB.

In a case that the target logical DU of the mobile IAB node configures the SSB corresponding to the beam and the CG PUSCH resource for the SSB, the UE selects the SSB with reception power being greater than the SSB reception power threshold among the SSBs indicated in the first configuration information as the SSB corresponding to the beam used for performing the RACH-less handover in the target cell.

In a case that the target logical DU of the mobile IAB node dynamically schedules the CG PUSCH resource for the UE via the PDCCH, the UE selects the SSB corresponding to the PDCCH with reception power being greater than the SSB reception power threshold as the SSB corresponding to the beam used for performing the RACH-less handover in the target cell.

In the embodiment of the present disclosure, the UE selects the SSB with better reception quality among the pre-configured SSBs or dynamically scheduled SSBs, thereby improving the reliability.

According to the handover method provided by the present disclosure, the UE determines the PUSCH resource for the SSB corresponding to the beam used for performing the RACH-less handover in the target cell, and sends the initial uplink message to the target cell using the PUSCH resource. The method directly selects the PUSCH resource corresponding to the SSB to access the target cell and saves the random access procedure, thereby reducing the handover latency.

In some embodiments, the method further includes:
initiating a random access procedure to access the target cell, in a case that reception power of all SSBs indicated in the first configuration information is less than the SSB reception power threshold, or the reception power of all SSBs corresponding to the detected PDCCH is less than the SSB reception power threshold.

In detail, in a case that the target logical DU of the mobile IAB node configures the SSBs corresponding to the beam and the CG PUSCH resources for the SSBs, if the reception power of all SSBs indicated in the first configuration information are less than the SSB reception power threshold, that is, there is no SSB meeting the threshold requirement in the SSBs indicated in the first configuration information, the UE returns to the random access procedure to access the target logical DU cell.

In a case that the target logical DU of the mobile IAB node dynamically schedules the CG PUSCH resource for the UE via the PDCCH, if the reception power of all SSBs corresponding to the detected PDCCH are less than the SSB reception power threshold, i.e., if the UE detects the PDCCH of the target logical DU cell and reference signal receiving power (RSRPs) of any of the SSBs corresponding to the PDCCH does not meet the threshold requirement, the UE returns to the random access procedure to access the target logical DU cell.

In the embodiment of the present disclosure, in a case that there is no SSB meeting the threshold requirement, the UE returns to the random access procedure to access the target logical DU cell, to ensure that the handover can be completed, thereby improving the reliability.

According to the handover method provided by the present disclosure, the UE determines the PUSCH resource for the SSB corresponding to the beam used for performing the RACH-less handover in the target cell, and sends the initial uplink message to the target cell using the PUSCH resource. The method directly selects the PUSCH resource corresponding to the SSB to access the target cell and saves the random access procedure, thereby reducing the handover latency.

The method in the above embodiments will be further explained with some specific examples.
Example 1: when a source logical DU cell and a target logical DU cell of an mobile IAB node use different downlink frequency points, a source donor-CU of an IAB-DU determines to hand over a UE served by the mobile IAB node from the source logical DU cell to the target logical DU cell according to a measurement result of the UE for the target logical DU cell. A target logical DU determines a beam for the UE to perform an RACH-less handover according to the measurement result of the UE for the target logical DU cell.

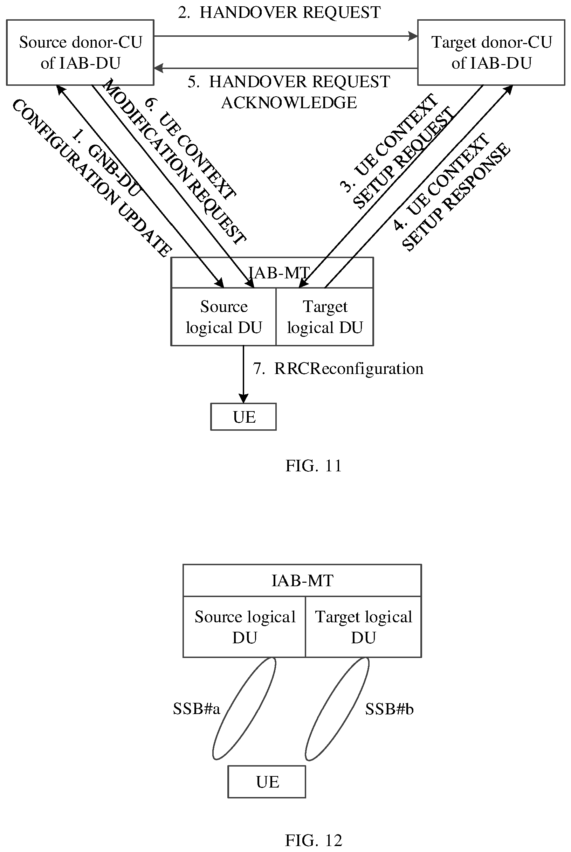

FIG. 11 is a schematic diagram of a handover principle provided by an embodiment of the present disclosure. As illustrated in FIG. 11, the handing over procedure includes the following steps.

At step 1, after a target logical DU establishes an F1 connection with a target donor-CU, a source logical DU sends associated information of a target logical DU cell, such as a GNB-DU CONFIGURATION UPDATE message, to a source donor-CU via an F1AP message. The information may indicate a source logical DU cell co-located with the target logical DU cell, and downlink frequency point information of the target logical DU cell. The target logical DU and the source logical DU may control one or more cells. A target logical DU cell may correspond to one or more co-located source logical DU cells, or a plurality of target logical DU cells may correspond to a single co-located source logical DU cell. The source donor-CU may know that the target logical DU cell and its co-located source logical DU cell have different downlink frequency points according to the above information, the source donor-CU configures a UE to perform a measurement on the target logical DU cell and determines to hand over the UE served by the mobile IAB node to the target logical DU cell according to a measurement result of the UE for the target logical DU cell.

At step 2, the source donor-CU includes the measurement result (including a cell-specific SSB/CSI-RS measurement result) reported by the UE for the target logical DU cell in a radio resource management (RRM) configuration of handover preparation information in a handover request, and sends the handover request to the target donor-CU.

At step 3, after the target donor-CU allocates resources to the UE, it forwards the handover preparation information to the target logical DU via a UE context setup request. The target logical DU determines that a source cell and a target cell are in co-location relationship according to a source cell ID in the handover preparation message and a target cell ID in the UE context setup request. If uplink frequency points of the source cell and the target cell meet a condition of belonging to the same TA group (TAG), it is determined that the UE may perform an RACH-less handover.

The target logical DU then determines an SSB used by the UE for performing the RACH-less handover according to a cell measurement result (a cell measurement result for an SSB/CSI-RS) in the handover preparation information, and pre-configures a type-1 CG PUSCH resource for the SSB (it may also set an RSRP threshold for the UE to select the SSB) or dynamically schedules a PUSCH resource for the UE via the PDCCH corresponding to the SSB.

At step 4, the target logical DU generates a CellGroupConfig information element containing ReconfigurationWithSync, and sends it to the target donor-CU via a UE CONTEXT SETUP RESPONSE message. The ReconfigurationWithSync indicates using a TA of the source cell for performing the RACH-less handover, and it may also include type-1 CG PUSCH resource information corresponding to the SSB pre-configured for the RACH-less handover of the UE.

At step 5, the target donor-CU generates a handover command containing the CellGroupConfig information element sent by the target logical DU, and includes the handover command in a HANDOVER REQUEST ACKNOWLEDGE message and sends it to the source donor-CU.

At step 6, the source donor-CU includes the handover command in a UE CONTEXT MODIFICATION message and forwards the message to the source logical DU.

At step 7, the source logical DU sends the handover command (RRCReconfiguration) to the UE. If the ReconfigurationWithSync contains the pre-configured type-1 CG PUSCH resource, the UE selects the SSB corresponding to the pre-configured PUSCH resource and sends an initial uplink message to the target logical DU cell based on the PUSCH resource and a TA of the source logical DU cell. In an implementation, the UE may select one of the pre-configured SSBs with RSRP meeting the threshold requirement.

If the ReconfigurationWithSync does not contain the pre-configured type-1 CG PUSCH resource, the UE detects the PDCCH of the target logical DU cell, selects the SSB corresponding to the PDCCH for scheduling for the UE, and sends the initial uplink message to the target logical DU cell based on the PUSCH resource scheduled by the PDCCH and the TA of the source logical DU cell. In an implementation, the UE may also detect the PDCCH of the target logical DU cell and select an SSB corresponding to the PDCCH with RSRP meeting the threshold requirement. If no SSB meets the threshold requirement, the UE may return to the random access procedure to access the target logical DU cell.

Example 2: when a source logical DU cell and a target logical DU cell of a mobile IAB node have a same downlink frequency point, a source donor-CU of an IAB-DU determines to hand over a UE served by the mobile IAB node from the source logical DU cell to the target logical DU cell according to a co-location relationship between the target logical DU cell and the source logical DU cell. A target logical DU determines a beam for the UE to perform an RACH-less handover according to a measurement result of the UE for the source logical DU cell.

FIG. 12 is a schematic diagram of another handover principle provided by an embodiment of the present disclosure. As illustrated in FIG. 12, a handing over procedure includes the following steps.

At step 1, after a target logical DU establishes an F1 connection with a target donor-CU, a source logical DU reports associated information of a target logical DU cell, such as a GNB-DU CONFIGURATION UPDATE message, to a source donor-CU via an F1AP message. The information may indicate a source logical DU cell co-located with the target logical DU cell, and downlink frequency point information of the target logical DU cell. The target logical DU and the source logical DU may control one or more cells. A target logical DU cell may correspond to one or more co-located source logical DU cells, or a plurality of target logical DU cells may correspond to a single co-located source logical DU cell. The source donor-CU may know that the target logical DU cell and its co-located source logical DU cell have the same downlink frequency point according to the above information, such that it may know that a measurement result of a UE for the target logical DU cell cannot be obtained. The source donor-CU may only determine to hand over the UE being served by a mobile IAB node from the source logical DU cell to the target logical DU cell according to a co-location relationship between the target logical DU cell and the source logical DU cell.

At step 2, the source donor-CU includes a measurement result (including a cell-specific SSB/CSI-RS measurement result) reported by the UE for the source logical DU cell in an RRM configuration of handover preparation information in a handover request, and sends the handover request to the target donor-CU.

At step 3, after the target donor-CU allocates resources to the UE, it forwards the handover preparation information to the target logical DU via a UE context setup request. The target logical DU determines that a source cell and a target cell are in co-location relationship according to a source cell ID in the handover preparation information and a target cell ID in the UE context setup request. If the uplink frequency points of the source cell and the target cell meet a condition of belonging to the same TAG, it is determined that the UE may perform an RACH-less handover.

The target logical DU then obtains an equivalent measurement result of the target logical DU cell according to the measurement result of the source logical DU cell (a measurement result for an SSB/CSI-RS) in the handover preparation information and a quasi-co-location relationship between an SSB of the source logical DU cell and an SSB of the target logical DU cell. For example, in the figure below, if SSB#a of the source logical DU cell and SSB#b of the target logical DU cell are in the quasi-co-location relationship, a measurement result of SSB#a of the source logical DU cell is used as a measurement result of SSB#b of the target logical DU cell.

According to the equivalent measurement result of the target logical DU cell, the target logical DU determines the SSB for the UE to perform the RACH-less handover, and pre-configures a type-1 CG PUSCH resource corresponding to that SSB (it may also include an RSRP threshold for the UE to select the SSB), or dynamically schedules a PUSCH resource for the UE via the PDCCH corresponding to the SSB.

At step 4, the target logical DU generates a CellGroupConfig information element containing ReconfigurationWithSync, and sends it to the target donor-CU via a UE CONTEXT SETUP RESPONSE message. The ReconfigurationWithSync indicates using a TA of the source cell for performing the RACH-less handover, and it may also include type-1 CG PUSCH resource information corresponding to the SSB pre-configured for the RACH-less handover of the UE.

At step 5, the target donor-CU generates a handover command containing the CellGroupConfig information element sent by the target logical DU, and includes the handover command in a HANDOVER REQUEST ACKNOWLEDGE message and sends it to the source donor-CU.

At step 6, the source donor-CU includes the handover command in a UE CONTEXT MODIFICATION message and forwards it to the source logical DU. After the source logical DU sends the handover command to the UE, it activates the target logic DU cell and deactivates the source logical DU cell.

At step 7, the source logical DU sends the handover command (RRCReconfiguration) to the UE. If the ReconfigurationWithSync contains the pre-configured type-1 CG PUSCH resource, the UE selects the SSB corresponding to the pre-configured PUSCH resource and sends an initial uplink message to the target logical DU cell based on the PUSCH resource and a TA of the source logical DU cell. In an implementation, the UE may select one of the pre-configured SSBs with RSRP meeting the threshold requirement.

If the ReconfigurationWithSync does not contain the pre-configured PUSCH resource, the UE detects the PDCCH of the target logical DU cell, selects the SSB corresponding to the PDCCH for scheduling for the UE, and sends the initial uplink message to the target logical DU cell based on the PUSCH resource scheduled by the PDCCH and the TA of the source logical DU cell. In an implementation, the UE may also detect the PDCCH of the target logical DU cell, and when the RSRP for the SSB corresponding to the PDCCH meets the threshold requirement, the UE selects the SSB corresponding to the PDCCH. If no SSB meets the threshold requirement, the UE may return to a random access procedure to access the target logical DU cell.

Example 3: when a source logical DU cell and a target logical DU cell of a mobile IAB node have a same downlink frequency point, a source donor-CU of an IAB-DU determines to hand over a UE served by the mobile IAB node from the source logical DU cell to the target logical DU cell according to a co-location relationship between the target logical DU cell and the source logical DU cell. A target logical DU determines a beam for the UE to perform an RACH-less handover according to a beam used by the UE in the source logical DU cell.

The handing over procedure includes the following steps.

At step 1, after a target logical DU establishes an F1 connection with a target donor-CU, a source logical DU reports associated information of a target logical DU cell, such as a GNB-DU CONFIGURATION UPDATE message, to a source donor-CU via an F1AP message. The information may indicate a source logical DU cell co-located with the target logical DU cell, and downlink frequency point information of the target logical DU cell. The source donor-CU may know that the target logical DU cell and its co-located source logical DU cell have the same downlink frequency point according to the above information, such that it may know that a measurement result of a UE for the target logical DU cell cannot be obtained. The source donor-CU may only determine to hand over the UE served by a mobile IAB node from the source logical DU cell to the target logical DU cell according to a co-location relationship between the target logical DU cell and the source logical DU cell.

At step 2, the source donor-CU includes an ID of the UE in the source logical DU cell (e.g., a cell radio network temporary identity (C-RNTI)) or an ID of the UE in the source logical DU (e.g., gNB-DU UE F1AP ID) in a handover request and sends it to the target donor-CU.

At step 3, after allocating resources for the UE, the target donor-CU forwards the ID of the UE in the source logical DU cell (e.g., C-RNTI) or the ID of the UE in the source logical DU (e.g., gNB-DU UE F1AP ID) to the target logical DU with a UE context setup request message. The target logical DU determines that a source cell and a target cell are co-located according to a source cell ID in handover preparation information and a target cell ID in the UE context setup request. If the uplink frequency points of the source cell and the target cell meet a condition of belonging to the same TAG, it is determined that the UE may perform the RACH-less handover.

The target logical DU then obtains a beam used by the UE in the source logical DU cell according to the ID of the UE in the source logical DU cell (e.g., C-RNTI) or the ID of the UE in the source logical DU (e.g., gNB-DU UE F1AP ID), and then determines a beam used by the UE in the target logical DU cell according to a quasi-co-location relationship between an SSB of the source logical DU cell and an SSB of the target logical DU cell. For example, if SSB#a of the source logical DU cell and SSB#b of the target logical DU cell are in a quasi-co-location relationship, and the UE uses SSB#a in the source logical DU cell, it is determined that the UE uses SSB#b in the target logical DU cell. The target logic DU pre-configures the PUSCH resource corresponding to the SSB (it may also include an RSRP threshold for the UE to select the SSB), or dynamically schedules the PUSCH resource for the UE via the PDC corresponding to the SSB.

At step 4, the target logical DU generates a CellGroupConfig information element containing ReconfigurationWithSync, and sends it to the target donor-CU via a UE CONTEXT SETUP RESPONSE message. The ReconfigurationWithSync indicates using a TA of the source cell for performing the RACH-less handover and may also include PUSCH resource information corresponding to the SSB pre-configured for the RACH-less handover of the UE.

At step 5, the target donor-CU generates a handover command containing the CellGroupConfig information element sent by the target logical DU, and includes the handover command in a HANDOVER REQUEST ACKNOWLEDGE message and sends it to the source donor-CU.

At step 6, the source donor-CU includes the handover command in a UE CONTEXT MODIFICATION message and forwards it to the source logical DU. After the source logical DU sends the handover command to the UE, it activates the target logic DU cell and deactivates the source logical DU cell.

At step 7, the source logical DU sends the handover command (RRCReconfiguration) to the UE. If the ReconfigurationWithSync contains the pre-configured PUSCH resource, the UE selects the SSB corresponding to the pre-configured PUSCH resource and sends an initial uplink message to the target logical DU cell based on the PUSCH resource and a TA of the source logical DU cell. In an implementation, the UE may also select one of the pre-configured SSBs with RSRP meeting the threshold requirement.

If the ReconfigurationWithSync does not contain the pre-configured PUSCH resource, the UE detects the PDCCH of the target logical DU cell, selects the SSB corresponding to the PDCCH for scheduling for the UE, and sends the initial uplink message to the target logical DU cell based on the PUSCH resource scheduled by the PDCCH and the TA of the source logical DU cell. In an implementation, the UE detects the PDCCH of the target logical DU cell, and when the RSRP for the SSB corresponding to the PDCCH meets the threshold requirement, the UE selects the SSB corresponding to the PDCCH. If no SSB meets the threshold requirement, it means that candidate SSBs selected for the UE are unsuitable. To avoid beam failure, the UE returns to a random access procedure to access the target logical DU cell.

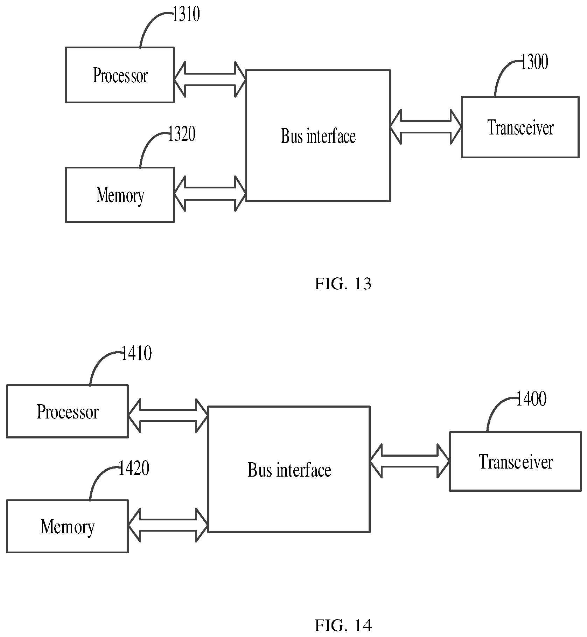

FIG. 13 is a schematic structural diagram of a source donor-CU of a source logical DU of a mobile IAB node provided by an embodiment of the present disclosure. As illustrated in FIG. 13, the source donor-CU includes: a memory 1320, a transceiver 1300 and a processor 1310.

The memory 1320 is configured to store a computer program, the transceiver 1300 is configured to send and receive data under the control of the processor 1310, and the processor 1310 is configured to read the computer program from the memory 1320 and perform operations of:
obtaining associated information of a target logical DU cell of the mobile IAB node; and
handing over a UE served by the mobile IAB node from a source logical DU cell of the mobile IAB node to the target logical DU cell of the mobile IAB node based on the associated information.

In FIG. 13, a bus architecture may include any number of interconnected buses and bridges, specifically one or more processors represented by the processor 1310 and various circuits of memories represented by the memory 1320 are linked together. The bus architecture may also link peripheral devices, voltage regulators, and various other circuits such as power management circuits together, which are well known in the art and will not be further described herein. There is a bus interface that provides an interface. The transceiver 1300 may include a plurality of components, such as a transmitter and a receiver, for providing units that can communicate with other devices over transmission media. The transmission media include wireless channels, wired channels, fiber optic cables, etc. The processor 1310 is responsible for managing the bus architecture and usual processing, and the memory 1320 may store data used by the processor 1310 in performing operations.

The processor 1310 may be a central processing unit (CPU), an application specific integrated circuit (ASIC), a field-programmable gate array (FPGA), or a complex programmable logic device (CPLD). The processor may also adopt a multi-core architecture.

In some embodiments, handing over the UE served by the mobile IAB node from the source logical DU cell of the mobile IAB node to the target logical DU cell of the mobile IAB node based on the associated information, includes:
configuring the UE to perform a measurement on the target logical DU cell; and
determining to hand over the UE to the target logical DU cell of the mobile IAB node based on a measurement result.

In some embodiments, handing over the UE served by the mobile IAB node from the source logical DU cell of the mobile IAB node to the target logical DU cell of the mobile IAB node based on the associated information, includes:
determining to hand over the UE to the target logical DU cell based on a correspondence relationship or a co-location relationship between the target logical DU cell and the source logical DU cell.

In some embodiments, the target logical DU cell and the source logical DU cell have a same downlink frequency point, or the target logical DU cell and the source logical DU cell have different downlink frequency points.

In some embodiments, obtaining the associated information of the target logical DU cell of the mobile IAB node includes:
obtaining the associated information sent by a source logical DU of the mobile IAB node via an F1AP message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

In some embodiments, the processor is further configured to read the computer program from the memory and perform operations of:
receiving a handover command for the UE from a target donor-CU of a target logical DU of the mobile IAB node; and
sending the handover command to the UE.

In detail, the source donor-CU of the source logical DU of the mobile IAB node provided by the embodiments of the present disclosure can implement all the steps of the method in the method embodiments where the execution entity is the source donor-CU of the source logical DU of the mobile IAB node, and can achieve the same technical effects. Therefore, the parts identical to the method embodiments and the beneficial effects will not be described in detail in the embodiments.

FIG. 14 is a schematic structural diagram of a mobile IAB node provided by an embodiment of the present disclosure. As illustrated in FIG. 14, the mobile IAB node includes: a memory 1420, a transceiver 1400 and a processor 1410.

The memory 1420 is configured to store a computer program, the transceiver 1400 is configured to send and receive data under the control of the processor 1410, and the processor 1410 is configured to read the computer program from the memory 1420 and perform operations of:
sending associated information of a target logical DU cell of the mobile IAB node, in which the associated information is used for handing over a UE served by the mobile IAB node from a source logical DU cell of the mobile IAB node to the target logical DU cell of the mobile IAB node.

In FIG. 14, a bus architecture may include any number of interconnected buses and bridges, specifically one or more processors represented by the processor 1410 and various circuits of memories represented by the memory 1420 are linked together. The bus architecture may also link peripheral devices, voltage regulators, and various other circuits such as power management circuits together, which are well known in the art and will not be further described herein. There is a bus interface that provides an interface. The transceiver 1400 may include a plurality of components, such as a transmitter and a receiver, for providing units that can communicate with other devices over transmission media. The transmission media include wireless channels, wired channels, fiber optic cables, etc. The processor 1410 is responsible for managing the bus architecture and usual processing, and the memory 1420 may store data used by the processor 1410 in performing operations.

In some embodiments, the processor 1410 may be a CPU, an ASIC, a FPGA or a CPLD. The processor may also adopt a multi-core architecture.

In some embodiments, the processor is further configured to read the computer program from the memory and perform operations of:
determining a beam for the UE to perform an RACH-less handover in the target logical DU cell;
configuring SSBs corresponding to the beam and CG PUSCH resources for the SSBs, in which the PUSCH resources are used for the UE to send an initial uplink message for the RACH-less handover to the target logical DU cell; and
sending first configuration information to a target donor-CU of a target logical DU of the mobile IAB node via an F1AP message, in which the first configuration information indicates the SSBs corresponding to the beam and the CG PUSCH resources for the SSBs.

In some embodiments, the processor is further configured to read the computer program from the memory and perform operations of:
determining a beam for the UE to perform an RACH-less handover in the target logical DU cell; and
dynamically scheduling a CG PUSCH resource for the UE via a PDCCH associated with an SSB corresponding to the beam, in which the PUSCH resource is used for the UE to send an initial uplink message to the target logical DU cell.

In some embodiments, determining the beam for the UE to perform the RACH-less handover in the target logical DU cell includes:
determining the beam for the UE to perform the RACH-less handover in the target logical DU cell based on a measurement result of the UE for the target logical DU cell included in handover preparation information.

In some embodiments, determining the beam for the UE to perform the RACH-less handover in the target logical DU cell includes:
determining a beam used by the UE in the source logical DU cell; and
determining the beam for the UE to perform the RACH-less handover in the target logical DU cell based on the beam used by the UE in the source logical DU cell.

In some embodiments, sending the associated information of the target logical DU cell of the mobile IAB node, includes:
sending the associated information of the target logical DU cell of the mobile IAB node to a source donor-CU of a source logical DU of the mobile IAB node via the F1AP message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

In detail, the mobile IAB node provided by the embodiments of the present disclosure can implement all the steps of the method in the method embodiments where the execution entity is the mobile IAB node, and can achieve the same technical effects. Therefore, the parts identical to the method embodiments and the beneficial effects will not be described in detail in the embodiments.

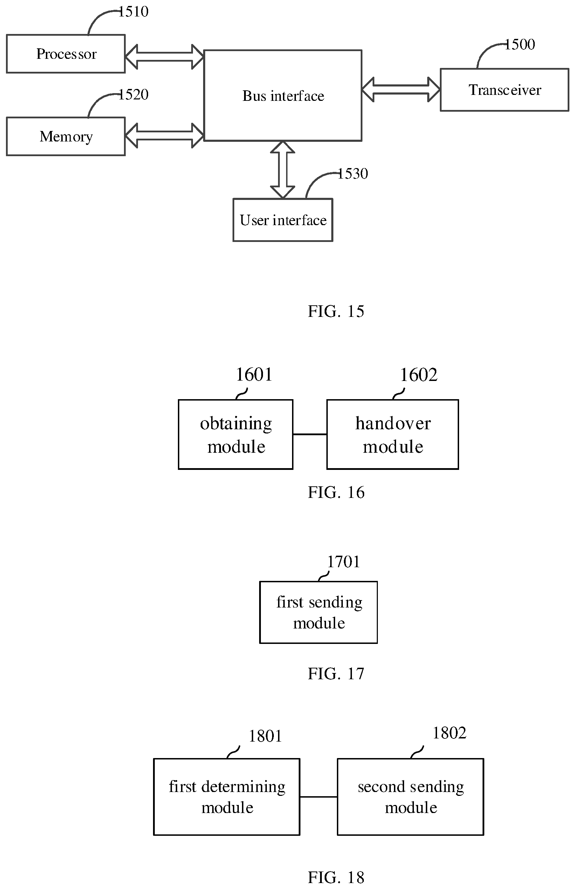

FIG. 15 is a schematic structural diagram of a UE provided by an embodiment of the present disclosure. As illustrated in FIG. 15, the UE includes: a memory 1520, a transceiver 1500 and a processor 1510.

The memory 1520 is configured to store a computer program, the transceiver 1500 is configured to send and receive data under the control of the processor 1510, and the processor 1510 is configured to read the computer program from the memory 1520 and perform operations of:
determining a PUSCH resource for an SSB corresponding to a beam used for performing an RACH-less handover in a target cell; and
sending an initial uplink message to the target cell using the PUSCH resource.

In FIG. 15, a bus architecture may include any number of interconnected buses and bridges, specifically one or more processors represented by the processor 1510 and various circuits of memories represented by the memory 1520 are linked together. The bus architecture may also link peripheral devices, voltage regulators, and various other circuits such as power management circuits together, which are well known in the art and will not be further described herein. There is a bus interface that provides an interface. The transceiver 1500 may include a plurality of components, such as a transmitter and a receiver, for providing units that can communicate with other devices over transmission media. The transmission media include wireless channels, wired channels, fiber optic cables, etc. For different UEs, a user interface 1530 may also be an interface capable of externally and internally connecting desired devices. The connected devices include, but are not limited to, a keypad, a display, a speaker, a microphone, a joystick, and the like.

The processor 1510 is responsible for managing the bus architecture and usual processing, and the memory 1520 may store data used by the processor 1510 in performing operations.

In some embodiments, the processor 1510 may be a CPU, an ASIC, a FPGA or a CPLD. The processor may also adopt a multi-core architecture.

The processor may implement any of the methods provided by the embodiments of the present disclosure by calling the computer program stored in the memory to perform the acquired executable instructions. The processor and the memory may also be physically separated.

In some embodiments, determining the PUSCH resource for the SSB corresponding to the beam used for performing the RACH-less handover in the target cell, includes:
receiving a handover command containing first configuration information from a network device, in which the first configuration information indicates SSBs corresponding to the beam used for performing the RACH-less handover in the target cell and CG PUSCH resources for the SSB; and
selecting an SSB corresponding to the beam used for performing the RACH-less handover in the target cell and determining the PUSCH resource for the SSB based on the first configuration information.

In some embodiments, determining the PUSCH resource for the SSB corresponding to the beam used for performing the RACH-less handover in the target cell includes:
receiving a handover command not containing first configuration information from a network device, in which the first configuration information indicates SSBs corresponding to the beam used for performing the RACH-less handover in the target cell and CG PUSCH resources for the SSBs; and
determining that an SSB corresponding to a PDCCH used by the target cell for scheduling for the UE is the SSB corresponding to the beam used for performing the RACH-less handover in the target cell, detecting the PDCCH used by the target cell for scheduling for the UE, and determining a PUSCH resource scheduled by the PDCCH.

In some embodiments, the handover command further includes second configuration information, and the second configuration information indicates an SSB reception power threshold for the UE to select the SSB; and
selecting the SSB corresponding to the beam used for performing the RACH-less handover in the target cell includes:
selecting an SSB with reception power being greater than the SSB reception power threshold among the SSBs indicated in the first configuration information as the SSB corresponding to the beam used for performing the RACH-less handover in the target cell; or
selecting an SSB corresponding to the PDCCH with reception power being greater than the SSB reception power threshold as the SSB corresponding to the beam used for performing the RACH-less handover in the target cell.

In some embodiments, the processor is further configured to read the computer program from the memory and perform an operation of:
initiating a random access procedure to access the target cell, in a case that reception power of the SSBs indicated in the first configuration information is less than the SSB reception power threshold, or the reception power of the SSB corresponding to the PDCCH is less than the SSB reception power threshold.

It is noted that the UE provided by the embodiments of the present disclosure can implement all the steps of the method in the method embodiments where the execution entity is the UE, and can achieve the same technical effects. Therefore, the parts identical to the method embodiments and the beneficial effects will not be described in detail in the embodiments.

FIG. 16 is a schematic structural diagram of a handover apparatus provided by an embodiment of the present disclosure. As illustrated in FIG. 16, the embodiment of the present disclosure provides a handover apparatus. The handover apparatus includes an obtaining module 1601 and a handover module 1602.

The obtaining module 1601 is configured to obtain associated information of a target logical DU cell of a mobile IAB node. The handover module 1602 is configured to hand over a UE served by the mobile IAB node from a source logical DU cell of the mobile IAB node to the target logical DU cell of the mobile IAB node based on the associated information.

In some embodiments, the handover module includes a configuring unit and a first handover unit.

The configuring unit is configured to configure the UE to perform a measurement on the target logical DU cell.

The first handover unit is configured to determine to hand over the UE to the target logical DU cell of the mobile IAB node based on a measurement result.

In some embodiments, the handover module includes:
a second handover unit, configured to determine to hand over the UE to the target logical DU cell based on a correspondence relationship or a co-location relationship between the target logical DU cell and the source logical DU cell.

In some embodiments, the target logical DU cell and the source logical DU cell have a same downlink frequency point, or the target logical DU cell and the source logical DU cell have different downlink frequency points.

In some embodiments, the obtaining module is further configured to:
obtain the associated information sent by a source logical DU of the mobile IAB node via an F1AP message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

In some embodiments, the apparatus further includes a receiving module and a third sending module.

The receiving module is configured to receive a handover command for the UE from a target donor-CU of a target logical DU of the mobile IAB node.

The third sending module is configured to send the handover command to the UE.

In detail, the handover apparatus provided by the embodiments of the present disclosure can implement all the steps of the method in the method embodiments where the execution entity is the source donor-CU of the source logical DU of the mobile IAB node, and can achieve the same technical effects. Therefore, the parts identical to the method embodiments and the beneficial effects will not be described in detail in the embodiments.

FIG. 17 is a schematic structural diagram of another handover apparatus provided by an embodiment of the present disclosure. As illustrated in FIG. 17, the embodiment of the present disclosure provides a handover apparatus. The handover apparatus includes a first sending module 1701.

The first sending module 1701 is configured to send associated information of a target logical DU cell of a mobile IAB node, in which the associated information is used for handing over a UE served by the mobile IAB node from a source logical DU cell of the mobile IAB node to the target logical DU cell of the mobile IAB node.

In some embodiments, the apparatus further includes:
a second determining module, configured to determine a beam for the UE to perform an RACH-less handover in the target logical DU cell;
a configuring module, configured to configure SSBs corresponding to the beam and CG PUSCH resources for the SSBs, in which the PUSCH resource are used for the UE to send an initial uplink message for the RACH-less handover to the target logical DU cell; and
a fourth sending module, configured to send first configuration information to a target donor-CU of a target logical DU of the mobile IAB node via an F1AP message, in which the first configuration information indicates the SSBs corresponding to the beam and the CG PUSCH resources for the SSBs.

In some embodiments, the apparatus further includes:
a second determining module, configured to determine a beam for the UE to perform an RACH-less handover in the target logical DU cell; and
a scheduling module, configured to dynamically schedule a CG PUSCH resource for the UE via a PDCCH associated with an SSB corresponding to the beam, in which the PUSCH resource is used for the UE to send an initial uplink message to the target logical DU cell.

In some embodiments, the second determining module includes a first determining unit.

The first determining unit is configured to determine the beam for the UE to perform the RACH-less handover in the target logical DU cell based on a measurement result of the UE for the target logical DU cell included in handover preparation information.

In some embodiments, the second determining module includes a second determining unit and a third determining unit.

The second determining unit is configured to determine a beam used by the UE in the source logical DU cell.

The third determining unit is configured to determine the beam for the UE to perform the RACH-less handover in the target logical DU cell based on the beam used by the UE in the source logical DU cell.

In some embodiments, the first sending module is further configured to:
send the associated information of the target logical DU cell of the mobile IAB node to a source donor-CU of a source logical DU of the mobile IAB node via the F1AP message.

In some embodiments, the associated information includes at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

In detail, the handover apparatus provided by the embodiments of the present disclosure can implement all the steps of the method in the method embodiments where the execution entity is the mobile IAB node, and can achieve the same technical effects. Therefore, the parts identical to the method embodiments and the beneficial effects will not be described in detail in the embodiments.

FIG. 18 is a schematic structural diagram of yet another handover apparatus provided by an embodiment of the present disclosure. As illustrated in FIG. 18, the embodiment of the present disclosure provides the handover apparatus. The handover apparatus includes: a first determining module 1801 and a second sending module 1802.

The first determining module 1801 is configured to determine a PUSCH resource for an SSB corresponding to a beam used for performing an RACH-less handover in a target cell. The second sending module 1802 is configured to send an initial uplink message to the target cell using the PUSCH resource.

In some embodiments, the first determining module includes a receiving unit and a fourth determining unit.

The receiving unit is configured to receive a handover command containing first configuration information from a network device, in which the first configuration information indicates SSBs corresponding to the beam used for performing the RACH-less handover in the target cell and CG PUSCH resources for the SSBs.

The fourth determining unit is configured to select an SSB corresponding to the beam used for performing the RACH-less handover in the target cell and determine the PUSCH resource for the SSB based on the first configuration information.

In some embodiments, the first determining module includes the receiving unit and a fifth determining unit.

The receiving unit is further configured to receive a handover command not containing first configuration information from a network device, in which the first configuration information indicates SSBs corresponding to the beam used for performing the RACH-less handover in the target cell and CG PUSCH resources for the SSBs.

The fifth determining unit is configured to determine that an SSB corresponding to a PDCCH used by the target cell for scheduling for the UE is the SSB corresponding to the beam used for performing the RACH-less handover in the target cell, detect the PDCCH used by the target cell for scheduling for the UE, and determine a PUSCH resource scheduled by the PDCCH.

In some embodiments, the handover command further includes second configuration information, and the second configuration information indicates an SSB reception power threshold for the UE to select the SSB.

The fourth determining unit is further configured to:
select an SSB with reception power being greater than the SSB reception power threshold among the SSBs indicated in the first configuration information as the SSB corresponding to the beam used for performing the RACH-less handover in the target cell; or
select an SSB corresponding to the PDCCH with reception power being greater than the SSB reception power threshold as the SSB corresponding to the beam used for performing the RACH-less handover in the target cell.

In some embodiments, the apparatus further includes:
an initiating module, configured to, initiate a random access procedure to access the target cell, in a case that reception power of the SSBs indicated in the first configuration information is less than the SSB reception power threshold, or the reception power of the SSB corresponding to the PDCCH is less than the SSB reception power threshold.

In detail, the handover apparatus provided by the embodiments of the present disclosure can implement all the steps of the method in the method embodiments where the execution entity is the terminal, and can achieve the same technical effects. Therefore, the parts identical to the method embodiments and the beneficial effects will not be described in detail in the embodiments.

It should be noted that the division of units/modules in the embodiments of the present disclosure is exemplary. The division is only based on logic functions, and there are other division methods in practical applications. The functional units in the embodiments of the present disclosure may be integrated into a single processing unit or physically separated, or two or more units may be integrated into a single unit. The integrated unit described above may be implemented either in hardware or as a software functional unit.

The integrated unit may be stored in a processor-readable storage medium if it is implemented in the form of a software functional unit and sold or used as an independent product. Based on this understanding, the essence of the technical solution of the present disclosure, a portion of the technical solution of the present disclosure that contributes to related arts, or part or all of the technical solution of the present disclosure may be embodied in the form of a software product. The computer software product is stored in a storage medium and includes several instructions to cause a computer device (e.g., a personal computer, a server or a network device) or a processor to implement all or part of the steps of the method in the embodiments of the present disclosure. The storage medium includes: an USB flash drive, a mobile hard drive, a read-only memory (ROM), a random access memory (RAM), a disk or a compact disc-ROM (CD-ROM), and other mediums that can be used to store program codes.

In some embodiments, a non-transitory readable storage medium is provided. The non-transitory readable storage medium stores a computer program, and the computer program is configured to cause a processor to implement the handover method provided by the method embodiments described above.

In detail, the non-transitory readable storage medium provided by the embodiments of the present disclosure can implement all the steps of the method in the method embodiments and achieves the same technical effects. Therefore, the parts identical to the method embodiments and the beneficial effects will not be described in detail in the embodiments.

It should be noted that the non-transitory readable storage medium may be any available medium or data storage device accessible by the processor. The medium includes, but is not limited to, a magnetic memory (e.g., a floppy disk, a hard disk, a magnetic tape, and a magneto-optical (MO) disk), an optical memory (e.g., a compact disc (CD), a digital versatile disc (DVD), a Blu-ray disc (BD) and a high-definition versatile disc (HVD)), and a semiconductor memory (e.g., an ROM, an erasable programmable read only memory (EPROM), an electrically EPROM (EEPROM), a NAND FLASH, and a solid-state drive (SSD)).

In some embodiments, a processor-readable storage medium is provided. The processor-readable storage medium stores a computer program, and the computer program is configured to cause a processor to implement the handover method provided by the method embodiments described above.

In detail, the processor-readable storage medium provided by the embodiments of the present disclosure can implement all the steps of the method in the method embodiments and achieves the same technical effects. Therefore, the parts identical to the method embodiments and the beneficial effects will not be described in detail in the embodiments.

In some embodiments, a computer-readable storage medium is provided. The computer-readable storage medium stores a computer program, and the computer program is configured to cause a computer to implement the handover method provided by the method embodiments described above.

In detail, the computer-readable storage medium provided by the embodiments of the present disclosure can implement all the steps of the method in the method embodiments and achieves the same technical effects. Therefore, the parts identical to the method embodiments and the beneficial effects will not be described in detail in the embodiments.

In some embodiments, a communication device is provided. The communication device stores a computer program, and the computer program is configured to cause the communication device to implement the handover method provided by the method embodiments described above.

In detail, the communication device provided by the embodiments of the present disclosure can implement all the steps of the method in the method embodiments and achieves the same technical effects. Therefore, the parts identical to the method embodiments and the beneficial effects will not be described in detail in the embodiments.

In some embodiments, a chip product is provided. The chip product stores a computer program, and the computer program is configured to cause the chip product to implement the handover method provided by the method embodiments described above.

In detail, the chip product provided by the embodiments of the present disclosure can implement all the steps of the method in the method embodiments and achieves the same technical effects. Therefore, the parts identical to the method embodiments and the beneficial effects will not be described in detail in the embodiments.

In addition, it is noted that in the embodiments of the present disclosure, terms such as "first" and "second" are used to distinguish similar objects and are not intended to describe a specific sequence or order. It is understood that these terms are interchangeable when appropriate, so that the embodiments of the present disclosure may be implemented in sequences other than those illustrated or described herein. Generally, the objects distinguished with the terms "first" and "second" belong to the same type, and the terms do not limit the number of objects. For example, there may be one or more "first" objects.

In the embodiments of the present disclosure, the term "and/or" is used to describe relationships between associated objects, and it indicates three types of relationships. For example, "A and/or B" indicates: A exists alone, A and B both exist, and B exists alone. Generally, the character "/" indicates that associated objects before and after the character "/" is in an "or" relationship.

In the embodiments of the present disclosure, "determining B based on A" means that A needs to be considered when determining B, and it is not limited to "determining B solely based on A". For example, it may also include: "determining B based on A and C," "determining B based on A, C and E", "determining C based on A, then further determining B based on C", and the like. In addition, it may also indicates that A is used as a condition for determining B, for example, "when A meets a first condition, using a first method to determine B", "when A meets a second condition, determining B", or "when A meets a third condition, determining B based on a first parameter". Certainly, it may further indicates that A is used as a condition for determining a factor of B, e.g., "when A meets the first condition, using the first method to determine C, and further determining B based on C."

In the embodiments of the present disclosure, "a plurality of" refers to two or more, which is similar for other quantifiers.

The technical solution provided by the embodiments of the present disclosure is applicable to various systems, in particular to 5G systems. For example, the applicable systems include a global system of mobile communication (GSM) system, a code division multiple access (CDMA) system, a wideband code division multiple access (WCDMA) general packet radio service (GPRS) system, an LTE system, an LTE frequency division duplex (FDD) system, an LTE time division duplex (TDD) system, an LTE-advanced (LTE-A) system, an universal mobile telecommunication system (UMTS), a worldwide interoperability for microwave access (WiMAX) system, and a 5G NR system. Each of these systems includes a terminal and a network device. The system may also include a core network portion, such as an evolved packet system (EPS), a 5G system (5GS), etc.

The terminal involved in the embodiments of the present disclosure may be a device that provides voice and/or data connectivity to users, a handheld device with a wireless connectivity function, or other processing devices connected to a wireless modem. The terminal is referred to by different names in different systems. For example, in the 5GS, the terminal may be referred to as UE. The wireless terminal may communicate with one or more core networks (CNs) via a radio access network (RAN). The wireless terminal may be a mobile terminal such as a cell phone (or "cellular" phone), or a computer having a mobile terminal, e.g., a portable, pocket-sized, handheld, computer-built or vehicle-mounted mobile device that is capable of exchanging language and/or data with the RAN. Examples of the wireless terminal include a personal communication service (PCS) phone, a cordless phone, a session initiated protocol (SIP) phone, a wireless local loop (WLL) station and a personal digital assistant (PDA). The wireless terminal may also be referred to as a system, a subscriber unit, a subscriber station, a mobile station, a mobile, a remote station, an access point, a remote terminal, an access terminal, a user terminal, a user agent, or a user device, which is not limited in the embodiments of the present disclosure.

The network device involved in the embodiments of the present disclosure may be a base station including a plurality of cells providing services to the terminal. Depending on the application scenario, the base station may be referred to as an access point or a device in the access network that communicates with the wireless terminal over one or more disk sectors over a radio interface, or by other names. The network device may exchange received radio frames with internet protocol (IP) packets, acting as a router between the wireless terminal and a remaining portion of the access network. The remaining portion of the access network includes an IP communication network. The network device may also be used for management coordination of attributes of the radio interface. For example, the network device involved in the embodiments of the present disclosure may be a base transceiver station (BTS) in the GSM system or the CDMA system, a NodeB (NB) in the WCDMA system, an evolutional NB (eNB) in the LTE system, a 5G gNB in a next generation system, a home evolved NB (HeNB), a relay node, a femto, a pico, etc., which is not limited in the embodiments of the present disclosure. In some network structures, the network device may include a centralized unit (CU) and a plurality of distributed units (DUs), and the CU and the DUs are physically separated.

The network device and the terminal each uses one or more antennas for multi-input multi-output (MIMO) transmission. MIMO transmission is categorized as single user-MIMO (SU-MIMO) and multiple user-MIMO (MU-MIMO). Depending on the form and quantity of the combination of antennas, MIMO transmission is divided into 2D-MIMO, 3D-MIMO, FD-MIMO and massive-MIMO. It may also involve diversity transmission, pre-coding transmission and beam-forming transmission.

Those skilled in the art understand that the embodiments of the present disclosure may be provided as a method, a system or a computer program product. Therefore, the present disclosure may be implemented in the form of all hardware embodiments, all software embodiments, or a combination of hardware embodiments and software embodiments. Moreover, the present disclosure may be implemented in the form of a computer program product embodied on one or more computer-usable storage mediums (including but not limited to a magnetic disk memory and an optical memory) containing computer usable program codes.

The present disclosure is described with reference to flowcharts and/or block diagrams of the method, the apparatus (system) and the computer program product according to the embodiments of the present disclosure. It should be understood that each process and/or block in the flowcharts and/or block diagrams, or any combination of processes and/or blocks in the flowcharts and/or block diagrams, can be implemented by computer-executable instructions. These computer-executable instructions are provided to a processor of a general-purpose computer, a dedicated computer, an embedded processor or a programmable data processing device to produce a machine, so that the instructions executed by the processor of the computer or the programmable data processing device can produce an apparatus for implementing functions specified in one or more processes in the flowcharts and/or one or more blocks in the block diagrams.

These processor-executable instructions may also be stored in a processor-readable memory that can direct the computer or the programmable data processing device to operate in a specific way, so that the instructions stored in the processor-readable memory can produce an article containing instructing units used for implementing the functions specified in one or more processes in the flowcharts and/or one or more blocks in the block diagrams.

These processor-executable instructions may also be loaded onto the computer or the programmable data processing device, so that a series of operation steps can be executed on the computer or the programmable device to produce processes implementable by the computer. The instructions executed on the computer or the programmable device provide steps for implementing the functions specified in one or more processes in the flowcharts and/or one or more blocks in the block diagrams.

Obviously, various changes and modifications may be made by those skilled in the art to the present disclosure without departing from the spirit and scope of the present disclosure. Since these changes and modifications to the present disclosure fall within the scope of the claims of the present disclosure and their equivalents, the present disclosure is intended to include these changes and modifications.

## Claims

1. A handover method, performed by a source donor-centralized unit (CU) of a source logical distributed unit (DU) of a mobile integrated access and backhaul (IAB) node, comprising:
obtaining associated information of a target logical DU cell of the mobile IAB node; and
handing over a user equipment (UE) served by the mobile IAB node from a source logical DU cell of the mobile IAB node to the target logical DU cell of the mobile IAB node based on the associated information.

2. The method of claim 1, wherein handing over the UE served by the mobile IAB node from the source logical DU cell of the mobile IAB node to the target logical DU cell of the mobile IAB node based on the associated information, comprises:
configuring the UE to perform a measurement on the target logical DU cell; and
determining to hand over the UE to the target logical DU cell of the mobile IAB node based on a measurement result.

3. The method of claim 1, wherein handing over the UE served by the mobile IAB node from the source logical DU cell of the mobile IAB node to the target logical DU cell of the mobile IAB node based on the associated information, comprises:
determining to hand over the UE to the target logical DU cell based on a correspondence relationship or a co-location relationship between the target logical DU cell and the source logical DU cell.

4. The method of claim 2 or 3, wherein the target logical DU cell and the source logical DU cell have a same downlink frequency point, or the target logical DU cell and the source logical DU cell have different downlink frequency points.

5. The method of any one of claims 1-4, wherein obtaining the associated information of the target logical DU cell of the mobile IAB node comprises:
obtaining the associated information sent by a source logical DU of the mobile IAB node via an F1 application protocol (FLAP) message.

6. The method of any one of claims 1-4, wherein the associated information comprises at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

7. The method of any one of claims 1-4, further comprising:
receiving a handover command for the UE from a target donor-CU of a target logical DU of the mobile IAB node; and
sending the handover command to the UE.

8. A handover method, performed by a mobile integrated access and backhaul (IAB) node, comprising:
sending associated information of a target logical distributed unit (DU) cell of the mobile IAB node, wherein the associated information is used for handing over a user equipment (UE) served by the mobile IAB node from a source logical DU cell of the mobile IAB node to the target logical DU cell of the mobile IAB node.

9. The method of claim 8, further comprising:
determining a beam for the UE to perform a random access channel (RACH)-less handover in the target logical DU cell;
configuring synchronization signal blocks (SSBs) corresponding to the beam and configured grant (CG) physical uplink shared channel (PUSCH) resources for the SSBs, wherein the CG PUSCH resources are used for the UE to send an initial uplink message for the RACH-less handover to the target logical DU cell; and
sending first configuration information to a target donor-centralized unit (CU) of a target logical DU of the mobile IAB node via an F1 application protocol (F1AP) message, wherein the first configuration information indicates the SSBs corresponding to the beam and the CG PUSCH resources for the SSBs.

10. The method of claim 8, further comprising:
determining a beam for the UE to perform an RACH-less handover in the target logical DU cell; and
dynamically scheduling a CG PUSCH resource for the UE via a physical downlink control channel (PDCCH) associated with an SSB corresponding to the beam, wherein the CG PUSCH resource is used for the UE to send an initial uplink message to the target logical DU cell.

11. The method of claim 9 or 10, wherein determining the beam for the UE to perform the RACH-less handover in the target logical DU cell comprises:
determining the beam for the UE to perform the RACH-less handover in the target logical DU cell based on a measurement result of the UE for the target logical DU cell comprised in handover preparation information.

12. The method of claim 9 or 10, wherein determining the beam for the UE to perform the RACH-less handover in the target logical DU cell comprises:
determining a beam used by the UE in the source logical DU cell; and
determining the beam for the UE to perform the RACH-less handover in the target logical DU cell based on the beam used by the UE in the source logical DU cell.

13. The method of any one of claims 8-10, wherein sending the associated information of the target logical DU cell of the mobile IAB node comprises:
sending the associated information of the target logical DU cell of the mobile IAB node to a source donor-CU of a source logical DU of the mobile IAB node via the F1AP message.

14. The method of any one of claims 8-10, wherein the associated information comprises at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

15. A handover method, performed by a user equipment (UE), comprising:
determining a physical uplink shared channel (PUSCH) resource for a synchronization signal block (SSB) corresponding to a beam used for performing a random access channel (RACH)-less handover in a target cell; and
sending an initial uplink message to the target cell using the PUSCH resource.

16. The method of claim 15, wherein determining the PUSCH resource for the SSB corresponding to the beam used for performing the RACH-less handover in the target cell comprises:
receiving a handover command comprising first configuration information from a network device, wherein the first configuration information indicates SSBs corresponding to the beam used for performing the RACH-less handover in the target cell and configured grant (CG) PUSCH resources for the SSBs; and
selecting an SSB corresponding to the beam used for performing the RACH-less handover in the target cell and determining the PUSCH resource for the SSB based on the first configuration information.

17. The method of claim 15, wherein determining the PUSCH resource for the SSB corresponding to the beam used for performing the RACH-less handover in the target cell comprises:
receiving a handover command not comprising first configuration information from a network device, wherein the first configuration information indicates SSBs corresponding to the beam used for performing the RACH-less handover in the target cell and CG PUSCH resources for the SSBs; and
determining that an SSB corresponding to a physical downlink control channel (PDCCH) used by the target cell for scheduling for the UE is the SSB corresponding to the beam used for performing the RACH-less handover in the target cell, detecting the PDCCH used by the target cell for scheduling for the UE, and determining a PUSCH resource scheduled by the PDCCH.

18. The method of claim 16, wherein the handover command further comprises second configuration information, and the second configuration information indicates an SSB reception power threshold for the UE to select the SSB; and
selecting the SSB corresponding to the beam used for performing the RACH-less handover in the target cell comprises:
selecting an SSB with reception power being greater than the SSB reception power threshold among the SSBs indicated in the first configuration information as the SSB corresponding to the beam used for performing the RACH-less handover in the target cell; or
selecting an SSB corresponding to the PDCCH with reception power being greater than the SSB reception power threshold as the SSB corresponding to the beam used for performing the RACH-less handover in the target cell.

19. The method of claim 18, further comprising:
initiating a random access procedure to access the target cell, in a case that reception power of the SSBs indicated in the first configuration information is less than the SSB reception power threshold, or the reception power of the SSB corresponding to the PDCCH is less than the SSB reception power threshold.

20. A source donor-centralized unit (CU) of a source logical distributed unit (DU) of a mobile integrated access and backhaul (IAB) node, comprising: a memory, a transceiver and a processor;
wherein the memory is configured to store a computer program, the transceiver is configured to send and receive data under the control of the processor, and the processor is configured to read the computer program from the memory and perform operations of:
obtaining associated information of a target logical DU cell of the mobile IAB node; and
handing over a user equipment (UE) served by the mobile IAB node from a source logical DU cell of the mobile IAB node to the target logical DU cell of the mobile IAB node based on the associated information.

21. The source donor-CU of claim 20, wherein handing over the UE served by the mobile IAB node from the source logical DU cell of the mobile IAB node to the target logical DU cell of the mobile IAB node based on the associated information, comprises:
configuring the UE to perform a measurement on the target logical DU cell; and
determining to hand over the UE to the target logical DU cell of the mobile IAB node based on a measurement result.

22. The source donor-CU of claim 20, wherein handing over the UE served by the mobile IAB node from the source logical DU cell of the mobile IAB node to the target logical DU cell of the mobile IAB node based on the associated information, comprises:
determining to hand over the UE to the target logical DU cell based on a correspondence relationship or a co-location relationship between the target logical DU cell and the source logical DU cell.

23. The source donor-CU of claim 21 or 22, wherein the target logical DU cell and the source logical DU cell have a same downlink frequency point, or the target logical DU cell and the source logical DU cell have different downlink frequency points.

24. The source donor-CU of any one of claims 20-23, wherein obtaining the associated information of the target logical DU cell of the mobile IAB node, comprises:
obtaining the associated information sent by a source logical DU of the mobile IAB node via an F1 application protocol (F1AP) message.

25. The source donor-CU of any one of claims 20-23, wherein the associated information comprises at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

26. The source donor-CU of any one of claims 20-23, wherein the processor is further configured to read the computer program from the memory and perform operations of:
receiving a handover command for the UE from a target donor-CU of a target logical DU of the mobile IAB node; and
sending the handover command to the UE.

27. A mobile integrated access and backhaul (IAB) node, comprising: a memory, a transceiver and a processor;
wherein the memory is configured to store a computer program, the transceiver is configured to send and receive data under the control of the processor, and the processor is configured to read the computer program from the memory and perform operations of:
sending associated information of a target logical distributed unit (DU) cell of the mobile IAB node, wherein the associated information is used for handing over a user equipment (UE) served by the mobile IAB node from a source logical DU cell of the mobile IAB node to the target logical DU cell of the mobile IAB node.

28. The mobile IAB node of claim 27, wherein the processor is further configured to read the computer program from the memory and perform operations of:
determining a beam for the UE to perform a random access channel (RACH)-less handover in the target logical DU cell;
configuring synchronization signal blocks (SSBs) corresponding to the beam and configured grant (CG) physical uplink shared channel (PUSCH) resources for the SSBs, wherein the PUSCH resources are used for the UE to send an initial uplink message for the RACH-less handover to the target logical DU cell; and
sending first configuration information to a target donor-centralized unit (CU) of a target logical DU of the mobile IAB node via an F1 application protocol (F1AP) message, wherein the first configuration information indicates the SSBs corresponding to the beam and the CG PUSCH resources for the SSBs.

29. The mobile IAB node of claim 27, wherein the processor is further configured to read the computer program from the memory and perform operations of:
determining a beam for the UE to perform an RACH-less handover in the target logical DU cell; and
dynamically scheduling a CG PUSCH resource for the UE via a physical downlink control channel (PDCCH) associated with an SSB corresponding to the beam, wherein the PUSCH resource is used for the UE to send an initial uplink message to the target logical DU cell.

30. The mobile IAB node of claim 28 or 29, wherein determining the beam for the UE to perform the RACH-less handover in the target logical DU cell comprises:
determining the beam for the UE to perform the RACH-less handover in the target logical DU cell based on a measurement result of the UE for the target logical DU cell comprised in handover preparation information.

31. The mobile IAB node of claim 28 or 29, wherein determining the beam for the UE to perform the RACH-less handover in the target logical DU cell comprises:
determining a beam used by the UE in the source logical DU cell; and
determining the beam for the UE to perform the RACH-less handover in the target logical DU cell based on the beam used by the UE in the source logical DU cell.

32. The mobile IAB node of any one of claims 27-29, wherein sending the associated information of the target logical DU cell of the mobile IAB node comprises:
sending the associated information of the target logical DU cell of the mobile IAB node to a source donor-CU of a source logical DU of the mobile IAB node via the F1AP message.

33. The mobile IAB node of any one of claims 27-29, wherein the associated information comprises at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

34. A user equipment (UE), comprising: a memory, a transceiver and a processor;
wherein the memory is configured to store a computer program, the transceiver is configured to send and receive data under the control of the processor, and the processor is configured to read the computer program from the memory and perform operations of:
determining a physical uplink shared channel (PUSCH) resource for a synchronization signal block (SSB) corresponding to a beam used for performing a random access channel (RACH)-less handover in a target cell; and
sending an initial uplink message to the target cell using the PUSCH resource.

35. The UE of claim 34, wherein determining the PUSCH resource for the SSB corresponding to the beam used for performing the RACH-less handover in the target cell, comprises:
receiving a handover command comprising first configuration information from a network device, wherein the first configuration information indicates SSBs corresponding to the beam used for performing the RACH-less handover in the target cell and configured grant (CG) PUSCH resources for the SSBs; and
selecting an SSB corresponding to the beam used for performing the RACH-less handover in the target cell and determining the PUSCH resource for the SSB based on the first configuration information.

36. The UE of claim 34, wherein determining the PUSCH resource for the SSB corresponding to the beam used for performing the RACH-less handover in the target cell comprises:
receiving a handover command not comprising first configuration information from a network device, wherein the first configuration information indicates SSBs corresponding to the beam used for performing the RACH-less handover in the target cell and CG PUSCH resources for the SSBs; and
determining that an SSB corresponding to a physical downlink control channel (PDCCH) used by the target cell for scheduling for the UE is the SSB corresponding to the beam used for performing the RACH-less handover in the target cell, detecting the PDCCH used by the target cell for scheduling for the UE, and determining a PUSCH resource scheduled by the PDCCH.

37. The UE of claim 35, wherein the handover command further comprises second configuration information, and the second configuration information indicates an SSB reception power threshold for the UE to select the SSB; and
selecting the SSB corresponding to the beam used for performing the RACH-less handover in the target cell comprises:
selecting an SSB with reception power being greater than the SSB reception power threshold among the SSBs indicated in the first configuration information as the SSB corresponding to the beam used for performing the RACH-less handover in the target cell; or
selecting an SSB corresponding to the PDCCH with reception power being greater than the SSB reception power threshold as the SSB corresponding to the beam used for performing the RACH-less handover in the target cell.

38. The UE of claim 37, wherein the processor is further configured to read the computer program from the memory and perform an operation of:
initiating a random access procedure to access the target cell, in a case that reception power of the SSBs indicated in the first configuration information is less than the SSB reception power threshold, or the reception power of the SSB corresponding to the PDCCH is less than the SSB reception power threshold.

39. A handover apparatus, comprising:
an obtaining module, configured to obtain associated information of a target logical distributed unit (DU) cell of a mobile integrated access and backhaul (IAB) node; and
a handover module, configured to hand over a user equipment (UE) served by the mobile IAB node from a source logical DU cell of the mobile IAB node to the target logical DU cell of the mobile IAB node based on the associated information.

40. The apparatus of claim 39, wherein the handover module comprises a configuring unit and a first handover unit,
the configuring unit is configured to configure the UE to perform a measurement on the target logical DU cell, and
the first handover unit is configured to determine to hand over the UE to the target logical DU cell of the mobile IAB node based on a measurement result.

41. The apparatus of claim 39, wherein the handover module comprises:
a second handover unit, configured to determine to hand over the UE to the target logical DU cell based on a correspondence relationship or a co-location relationship between the target logical DU cell and the source logical DU cell.

42. The apparatus of claim 40 or 41, wherein the target logical DU cell and the source logical DU cell have a same downlink frequency point, or the target logical DU cell and the source logical DU cell have different downlink frequency points.

43. The apparatus of any one of claims 39-42, wherein the obtaining module is further configured to:
obtain the associated information sent by a source logical DU of the mobile IAB node via an F1 application protocol (F1AP) message.

44. The apparatus of any one of claims 39-42, wherein the associated information comprises at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

45. The apparatus of any one of claims 39-42, further comprising:
a receiving module, configured to receive a handover command for the UE from a target donor-centralized unit (CU) of a target logical DU of the mobile IAB node; and
a third sending module, configured to send the handover command to the UE.

46. A handover apparatus, comprising:
a first sending module, configured to send associated information of a target logical distributed unit (DU) cell of a mobile integrated access and backhaul (IAB) node, wherein the associated information is used for handing over a user equipment (UE) served by the mobile IAB node from a source logical DU cell of the mobile IAB node to the target logical DU cell of the mobile IAB node.

47. The apparatus of claim 46, further comprising:
a second determining module, configured to determine a beam for the UE to perform a random access channel (RACH)-less handover in the target logical DU cell;
a configuring module, configured to configure synchronization signal blocks (SSBs) corresponding to the beam and configured grant (CG) physical uplink shared channel (PUSCH) resources for the SSBs, wherein the PUSCH resources are used for the UE to send an initial uplink message for the RACH-less handover to the target logical DU cell; and
a fourth sending module, configured to send first configuration information to a target donor-centralized unit (CU) of a target logical DU of the mobile IAB node via an F1 application protocol (F1AP) message, wherein the first configuration information indicates the SSBs corresponding to the beam and the CG PUSCH resources for the SSBs.

48. The apparatus of claim 46, further comprising:
a second determining module, configured to determine a beam for the UE to perform an RACH-less handover in the target logical DU cell; and
a scheduling module, configured to dynamically schedule a CG PUSCH resource for the UE via a physical downlink control channel (PDCCH) associated with an SSB corresponding to the beam, wherein the PUSCH resource is used for the UE to send an initial uplink message to the target logical DU cell.

49. The apparatus of claim 47 or 48, wherein the second determining module comprises a first determining unit, and
the first determining unit is configured to determine the beam for the UE to perform the RACH-less handover in the target logical DU cell based on a measurement result of the UE for the target logical DU cell comprised in handover preparation information.

50. The apparatus of claim 47 or 48, wherein the second determining module comprises a second determining unit and a third determining unit,
the second determining unit is configured to determine a beam used by the UE in the source logical DU cell, and
the third determining unit is configured to determine the beam for the UE to perform the RACH-less handover in the target logical DU cell based on the beam used by the UE in the source logical DU cell.

51. The apparatus of any one of claims 46-48, wherein the first sending module is further configured to:
send the associated information of the target logical DU cell of the mobile IAB node to a source donor-CU of a source logical DU of the mobile IAB node via the F1AP message.

52. The apparatus of any one of claims 46-48, wherein the associated information comprises at least one of:
identification information of the target logical DU cell;
identification information of the source logical DU cell corresponding to or co-located with the target logical DU cell;
downlink frequency point information of the target logical DU cell; or
sounding reference signal configuration information of the target logical DU cell.

53. A handover apparatus, comprising:
a first determining module, configured to determine a physical uplink shared channel (PUSCH) resource for a synchronization signal block (SSB) corresponding to a beam used for performing a random access channel (RACH)-less handover in a target cell; and
a second sending module, configured to send an initial uplink message to the target cell using the PUSCH resource.

54. The apparatus of claim 53, wherein the first determining module comprises a receiving unit and a fourth determining unit,
the receiving unit is configured to receive a handover command comprising first configuration information from a network device, wherein the first configuration information indicates SSBs corresponding to the beam used for performing the RACH-less handover in the target cell and configured grant (CG) PUSCH resources for the SSBs, and
the fourth determining unit is configured to select an SSB corresponding to the beam used for performing the RACH-less handover in the target cell and determine the PUSCH resource for the SSB based on the first configuration information.

55. The apparatus of claim 53, wherein the first determining module comprises a receiving unit and a fifth determining unit,
the receiving unit is further configured to receive a handover command not comprising first configuration information from a network device, wherein the first configuration information indicates SSBs corresponding to the beam used for performing the RACH-less handover in the target cell and CG PUSCH resources for the SSBs, and
the fifth determining unit is configured to determine that an SSB corresponding to a physical downlink control channel (PDCCH) used by the target cell for scheduling for the UE is the SSB corresponding to the beam used for performing the RACH-less handover in the target cell, detecting the PDCCH used by the target cell for scheduling for the UE, and determine a PUSCH resource scheduled by the PDCCH.

56. The apparatus of claim 54, wherein the handover command further comprises second configuration information, and the second configuration information indicates an SSB reception power threshold for the UE to select the SSB; and
the fourth determining unit is further configured to:
select an SSB with reception power being greater than the SSB reception power threshold among the SSBs indicated in the first configuration information as the SSB corresponding to the beam used for performing the RACH-less handover in the target cell; or
select an SSB corresponding to the PDCCH with reception power being greater than the SSB reception power threshold as the SSB corresponding to the beam used for performing the RACH-less handover in the target cell.

57. The apparatus of claim 56, further comprising:
an initiating module, configured to initiate a random access procedure to access the target cell, in a case that reception power of the SSBs indicated in the first configuration information is less than the SSB reception power threshold, or the reception power of the SSB corresponding to the PDCCH is less than the SSB reception power threshold.

58. A non-transitory readable storage medium, wherein the non-transitory readable storage medium stores a computer program, and the computer program is configured to cause a processor to implement the handover method of any one of claims 1-7.

59. A non-transitory readable storage medium, wherein the non-transitory readable storage medium stores a computer program, and the computer program is configured to cause a processor to implement the handover method of any one of claims 8-14.

60. A non-transitory readable storage medium, wherein the non-transitory readable storage medium stores a computer program, and the computer program is configured to cause a processor to implement the handover method of any one of claims 15-19.
